(19) Europäisches Patentamt / European Patent Office / Office européen des brevets

(11) **EP 3 026 566 A1**

(12) **EUROPEAN PATENT APPLICATION**
published in accordance with Art. 153(4) EPC

(43) Date of publication:
**01.06.2016 Bulletin 2016/22**

(51) Int Cl.:
***G06F 13/00*** (2006.01)

(21) Application number: **13890240.8**

(22) Date of filing: **22.07.2013**

(86) International application number:
**PCT/JP2013/069774**

(87) International publication number:
**WO 2015/011757 (29.01.2015 Gazette 2015/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Fujitsu Limited**
**Kawasaki-shi, Kanagawa 211-8588 (JP)**

(72) Inventors:
• **SHIMADA, Daichi**
**Kawasaki-shi**
**Kanagawa 211-8588 (JP)**

• **SAZAWA, Shinichi**
**Kawasaki-shi**
**Kanagawa 211-8588 (JP)**
• **HASHIMA, Masayoshi**
**Kawasaki-shi**
**Kanagawa 211-8588 (JP)**
• **SATO, Yuichi**
**Kawasaki-shi**
**Kanagawa 211-8588 (JP)**

(74) Representative: **Fenlon, Christine Lesley**
**Haseltine Lake LLP**
**Lincoln House, 5th Floor**
**300 High Holborn**
**London WC1V 7JH (GB)**

(54) **INFORMATION PROCESSING APPARATUS, METHOD, AND PROGRAM**

(57)     An information processing device calculates a buffer size of a buffer included in a client device by multiplying a band available in communication with the client device by a round trip time of the communication. The information processing device calculates an integer value by turning a real number into an integer, and sets the integer value as an unused size, the real number being obtained by dividing the buffer size by a transmission data size set for the client device. The information processing device sets a value obtained by dividing the round trip time by the integer value or a value obtained by dividing the transmission data size by the band as a transmission interval. Every time the transmission interval has passed, the information processing device determines whether the unused size is greater than a first value, generates image data of a screen of a remote desktop and transmits the image data to the client device when the unused size is greater than the first value, and subtracts a second value from the unused size. Every time a response to the transmitted image data is received from the client device, the information processing device adds the second value to the unused size.

FIG. 15

EP 3 026 566 A1

**Description**

Technical Field

The embodiments discussed herein are related to an information processing device, a method, and a program.

Background Art

With the Remote Desktop feature, a virtualized desktop environment (hereinafter referred to as a "virtual desktop") is installed in a server device. A client device can remotely access a server so as to use a virtual desktop provided by using calculation resources of the server device. In recent years, as a result of improvements in functioning of mobile devices such as smartphones and the spread of mobile devices, the need to use a service to provide the Remote Desktop feature in a mobile environment has been increasing. Also, from the point of view of data security measures or operation management costs for a personal computer, services to provide the Remote Desktop feature have been attracting attention.

On the other hand, a distance between communication devices that communicate data has been increasing as a result of business globalization and the like. A Round Trip Time (RTT), which is a time period needed after a signal or data is transmitted to a communication partner until a response is received from the communication partner, is influenced by a physical distance to the communication partner or the number of relay or transfer devices on a route. As an example, a round trip time on a route between a transmission-side communication device and a reception-side communication device increases as the distance between the transmission-side communication device and the reception-side communication device increases. In a scheme, such as TCP, that ensures the arrival of data by using an ACKnowledgement (ACK), when the round trip time increases, a time period needed until the acknowledgement is received from the reception-side communication device also increases. This results in an increase in a waiting time, and a decrease in throughput in communication.

Further, there exists a situation in which another application running in the client device occupies a communication band, and a communication band available to construct a remote desktop environment is limited. In such a situation, communication speed further decreases.

In view of the foregoing, a technology is known for providing a motion picture information transmission method and apparatus that reduce or eliminate loss of information, transmission information delay, and the like that result from lack of uniformity of a transmission quantity on a transmission line for transmitting motion picture information from a server device to a client device. A technology is also known for reducing moving image data transmission errors (see, for example, Patent Documents 1 and 2).

Patent Document 1: Japanese Laid-open Patent Publication No. 2005-260302
Patent Document 2: Japanese Laid-open Patent Publication No. 2009-49529

Summary of the Invention

In an example of the Remote Desktop feature, a server device transmits image data obtained by capturing a screen of a virtual desktop to a client device. The client device displays the received image data on a display screen. A user of the client device can understand a state of the virtual desktop from the image data displayed on the display screen. In addition, the client device reports an operation that the user has input to the virtual desktop to the server device. The server device updates the screen of the virtual desktop in accordance with the input operation of the user. This allows a desktop environment to be used even in a client device that is not installed with a desktop environment. In the implementation above, for example, communication speed is influenced by an updating interval of a screen of a remote desktop in the client device. An increase in the updating interval of the screen results in a decrease in usability of the remote desktop. The decrease in usability can be improved, for example, by increasing the communication speed, but depending on a network environment, there is a situation in which it is difficult to sufficiently increase the communication speed. Thus, there are expectations for the provision of a technology for improving the usability of a remote desktop even at a prescribed communication speed, for example.

A method performed by an information processing device according to one aspect of the embodiments includes calculating, setting as an unused size, setting as a transmission interval, subtracting, and adding. The calculating calculates a buffer size of a buffer included in a client device by multiplying a band available in communication with the client device by a round trip time of the communication. The setting as an unused size calculates an integer value by turning a real number into an integer, and sets the integer value as an unused size, the real number being obtained by dividing the buffer size by a transmission data size set for the client device. The setting as a transmission interval sets a value obtained by dividing the round trip time by the integer value or a value obtained by dividing the transmission data size by the band as a transmission interval. Every time the transmission interval has passed, the subtracting determines whether the unused size is greater than a first value, generates image data of a screen of a remote desktop and transmits the image data to the client device when the unused size is greater than the first value, and subtracts a second value from the unused size. Every time a response to the image data transmitted by the subtracting is received from the client device, the adding adds the second value to the unused size.

The usability of a remote desktop can be improved.

Brief Description of the Drawings

FIG. 1 illustrates a flow of transceiving of data between a server device and a client device in a remote desktop providing system.

FIG. 2 illustrates a flow of transceiving of data in a case where image data of the next screen is transmitted without awaiting the arrival of an acknowledgement from a client device.

FIG. 3 illustrates the control of the number of transmissions of screen data by using a drop frame and a sliding window.

FIG. 4 illustrates non-uniformity of an updating interval of a screen.

FIG. 5 illustrates responsiveness of a display screen to an operation input by a user.

FIG. 6 illustrates suppression of non-uniformity of an updating interval of a screen by using a transmission interval according to embodiments.

FIG. 7 illustrates improvements in responsiveness to a user's operation of a screen by using a transmission interval according to embodiments.

FIG. 8 illustrates a screen of a virtual desktop of a server device, and a display screen of a client device.

FIG. 9 illustrates a remote desktop providing system according to embodiments.

FIG. 10 illustrates a functional block configuration of a server device according to embodiments.

FIG. 11 illustrates a functional block configuration of a client device according to embodiments.

FIG. 12 illustrates setting information according to embodiments.

FIG. 13 illustrates screen information according to embodiments.

FIG. 14 illustrates an acknowledgement according to embodiments.

FIG. 15 illustrates a process of transceiving screen data according to a first embodiment.

FIG. 16 illustrates a process of transceiving screen data according to a second embodiment.

FIG. 17 illustrates a process of transceiving screen data according to a third embodiment.

FIG. 18 illustrates a resetting process.

FIG. 19 illustrates a hardware configuration of an information processing device that implements a server device according to embodiments.

FIG. 20 illustrates a hardware configuration of an information processing device that implements a client device according to embodiments.

Description of Embodiments

With reference to the drawings, some embodiments of the present invention are described below in detail. Elements that correspond to each other in a plurality of drawings are denoted by the same reference numerals.

As described above, in an example of the remote desktop, a virtual desktop environment is installed onto a server device. The server device transmits image data obtained by capturing, for example, a screen of a virtual desktop to a client device. Capturing of the screen of the virtual desktop may be, for example, the server device generating image data of the screen of the virtual desktop. Upon receipt of the image data from the server device, the client device transmits, to the server device, an ACKnowledgement (ACK) that is a signal indicating reception of the image data. The client device then displays the received image data, for example, on a display screen of a display device included in the client device so as to project a state of the virtual desktop of the server device onto the display screen of the client device. Upon receipt of the acknowledgement from the client device, the server device transmits, to the client device, image data of the next screen obtained by capturing the screen of the virtual desktop again. By repeating the processes above, a user can confirm the state of the screen of the virtual desktop on the display screen of the client device, and can operate the virtual desktop in the client device.

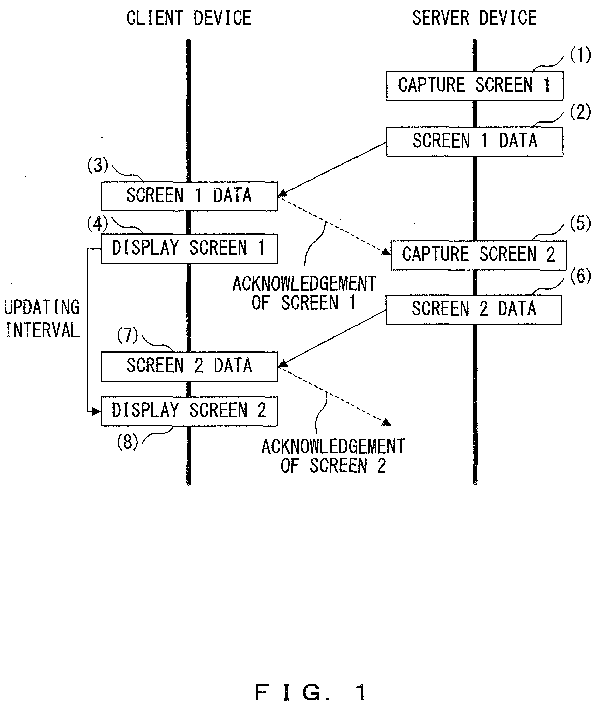

FIG. 1 illustrates a flow of transceiving of data between the server device and the client device in the remote desktop providing system described above as an example. In the description below, in order to distinguish a series of screens of the virtual desktop that are captured by the server device from each other in a time series, "screen n" formed by adding a number n after the term "screen" is used for example. The added number n represents the time-series order of the screen captured by the server device. As an example, "screen 1" formed by adding the number "1" represents a screen of the virtual desktop captured first by the server device at and after a point in time, and "screen 2" represents a screen captured by the server device after "screen 1". In the description below, image data obtained by capturing the screen is referred to as "screen data". Further, image data of a screen that is captured by the server device for the n-th time after a point in time is referred to as "screen n data". Namely, "screen 1 data" is image data obtained by capturing "screen 1", and "screen 2 data" is image data obtained by capturing "screen 2".

As illustrated in FIG. 1, when the server device initiates provision of the remote desktop to the client device, the server device captures a screen (screen 1) of the virtual desktop so as to obtain image data (screen 1 data) of the screen ( (1) in FIG. 1). The server device transmits the screen 1 data to the client device after performing, for example, compression on the obtained screen 1 data ((2) in FIG. 1). Upon receipt of the screen 1 data, the client device transmits, to the server device, an acknowledgement that is a signal indicating reception of the screen 1 data ((3) in FIG. 1). The client device then displays the received screen 1 data, for example, on a display screen of a display device included in the client device ((4) in FIG. 1) so as to provide a user with the screen displayed in the virtual desktop. Upon receipt of the acknowledgement from the client device, the server device captures the screen of the virtual desktop again so as to obtain image data (screen 2 data) of the next screen (screen 2) ((5) in FIG. 1). The server device transmits the screen 2 data to the client device after performing, for example, compression on the screen 2 data of the captured screen 2, similarly to the case of screen 1 ((6) in FIG. 1). Upon receipt of the screen 2 data, the client device transmits, to the server device, an acknowledgement indicating normal reception of the screen 2 data ((7) in FIG. 1), and displays the received screen 2 data, for example, on the display screen of the display device included in the client device ((8) in FIG. 1). By repeating the processes above, for example, screens displayed in the virtual desktop of the server device are sequentially displayed on the display screen of the client device, and a remote desktop environment is provided.

In the example illustrated in FIG. 1 as described above, the server device confirms that transmitted image data of a screen has been normally received by the client device, by using an acknowledgement, and then generates and transmits image data of the next screen. Therefore, pieces of image data of screens are displayed on the display screen of the client device in the same order as the order of the screens captured by the server device, and a user can perceive a change with time in the screen of the virtual desktop on the display screen of the client device. Accordingly, the user can perceive, for example, a response to an operation that the user has performed on the virtual desktop, on the display screen of the client device.

However, in the scheme above in which image data of the next screen is transmitted after awaiting an acknowledgement from the client device, a round trip time is directly reflected in an updating interval of a screen. This causes a remarkable decrease in responsiveness to a user's operation in a network environment having a long round trip time. The responsiveness to a user' s operation is, for example, a time period after a user operates a mouse or a keyboard (for example, so as to move a cursor or to input characters) before the operation is reflected in the display screen of the client device, and as this time period becomes shorter, the responsiveness becomes higher.

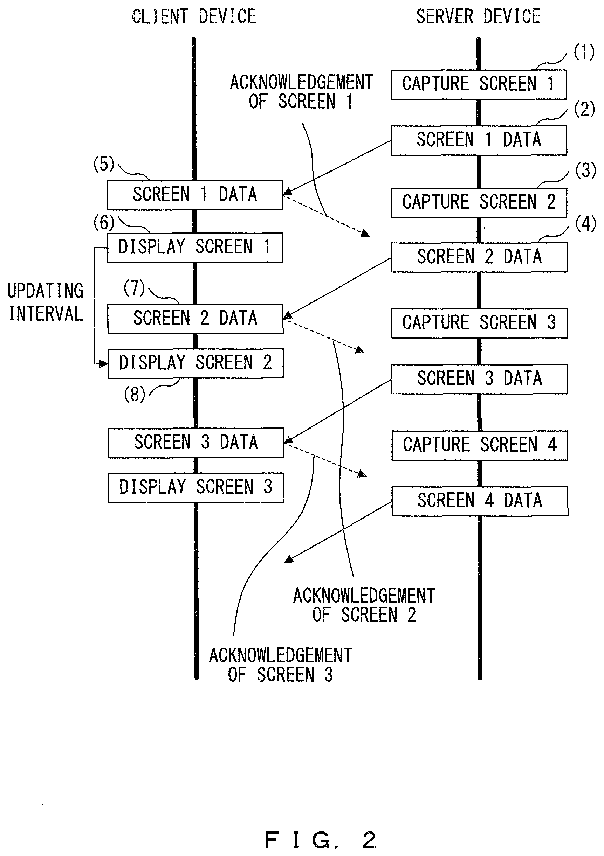

In order to suppress an increase in the updating interval of the screen due to the round trip time as described above, the server device may transmit image data of the next screen without awaiting an acknowledgement from the client device. FIG. 2 illustrates a flow of transceiving of data in a case where the server device transmits image data of the next screen without awaiting the arrival of an acknowledgement from the client device.

In the example illustrated in FIG. 2, when the server device initiates provision of the remote desktop to the client device, the server device captures the screen of the virtual desktop so as to obtain screen 1 data, which is image data of screen 1 ( (1) in FIG. 2). The server device then transmits the screen 1 data to the client device after performing, for example, compression on the obtained screen 1 data ( (2) in FIG. 2). Then, the server device captures the next screen of the virtual desktop so as to obtain screen 2 data, which is image data of screen 2, without awaiting reception of an acknowledgement of the transmitted screen 1 data from the client device ((3) in FIG. 2). The server device transmits the screen 2 data to the client device after performing, for example, compression on the obtained screen 2 data, similarly to the case of screen 1 ( (4) in FIG. 2). In the processes that follow, the server device captures the screen of the virtual desktop at prescribed time intervals without awaiting reception of an acknowledgement of the transmitted image data from the client device, and sequentially transmits the image data to the client device after performing, for example, compression.

Meanwhile, upon receipt of the screen 1 data transmitted from the server device, the client device transmits, to the server device, an acknowledgement that is a signal indicating normal reception of the screen 1 data ((5) in FIG. 2). The client device then displays the received screen 1 data, for example, on the display screen of the display device included in the client device ( (6) in FIG. 2). Similarly, upon receipt of the screen 2 data, the client device transmits, to the server device, an acknowledgement indicating normal reception of the screen 2 data ((7) in FIG. 2), and displays the received screen 2 data on the display screen ( (8) in FIG. 2). In the processes that follow, upon receipt of image data transmitted from the server device, the client device transmits an acknowledgement of the received image data to the server device, and sequentially displays the received image data on the display screen.

By performing the processes above, for example, the server device transmits, to the client device, an image obtained by capturing the screen without awaiting an acknowledgement from the client device, and this can suppress an increase in an updating interval of image data in the client device even when the round trip time is long.

In the configuration above in which the server device transmits screen data without awaiting an acknowledgement from the client device, depending on the transmission scheme, the order of actually captured screens may be different from the order of image data received by the client device. Namely, in FIG. 2, for example, the screen 2 data transmitted after the screen 1 data may be received by the client device prior to the screen 1 data. In the remote desktop, it is preferable that the client device display screen data in the order of the screens captured by the server device. Here, it is assumed for example that a user is performing an operation to move a mouse cursor. In this case, when obtained screen data is displayed in an order different from the order of captured screens, inconvenience occurs whereby it seems to the user as if the cursor has moved in a direction opposite to the direction in which the user actually moves the cursor. The inconvenience above results in a decrease in usability, and therefore it is preferable that, in the remote desktop, the client device display the screen data in the order of screens captured by the server device. Accordingly, a buffer that stores image data received from the server device is provided in the client device. The server device adds sequence numbers representing the order of captured screens to image data to be transmitted, and transmits the image data to the client device. The client device stores the received image data in the buffer, and displays the received image data on the display screen of the display device in accordance with the added sequence numbers, thereby allowing the screen data to be displayed in order.

However, even in the configuration above, there is a limit to the size of the buffer of the client device. Therefore, as an example, when pieces of screen data of a number that is greater than or equal to the number of pieces of screen data that can be stored in the buffer are transmitted, an overflow may occur. Alternatively, even when the buffer is used, data exceeding an available band may be transmitted from the server device to the client device. In order to avoid the situations above, it is preferable that a scheme to control the number of transmissions of screen data from the server device to the client device be provided, for example.

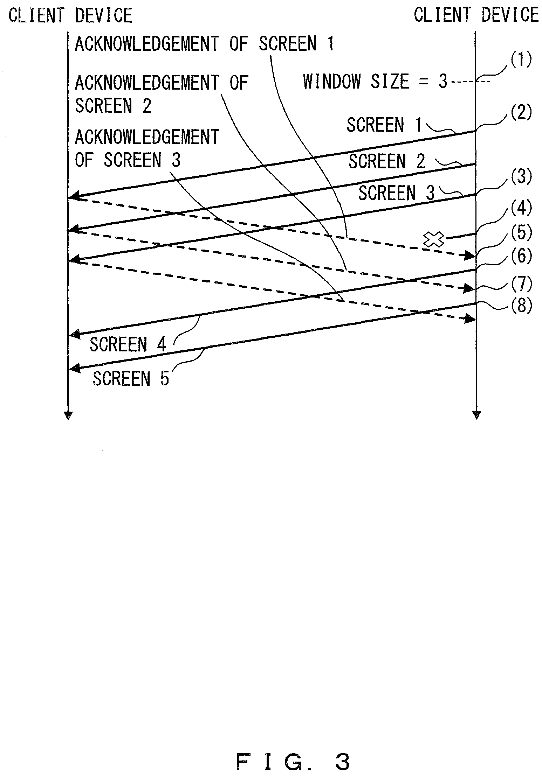

FIG. 3 illustrates the control of the number of transmissions of screen data by using a drop frame and a sliding window. The sliding window is a scheme in which a window (frame) having a prescribed size is prepared, screen data is transmitted when there are unused regions in the window, and transmission is delayed until an unused region is available when there are no unused regions. In the sliding window, for example, an overflow can be suppressed by appropriately setting the sizes of the window and the buffer.

In the example illustrated in FIG. 3, the size of the window is set to 3 ((1) in FIG. 3). Accordingly, the initial value of the unused size of the window is 3, which is equal to the value of the size of the window. When the server device transmits one piece of screen data, the server device decrements the unused size by 1, and when the server device receives an acknowledgement from the client device, the server device increments the unused size by 1. By doing this, the unused size of the window is updated. In FIG. 3, for example, when the server device initiates provision of the remote desktop to the client device, the server device captures the screen of the virtual desktop, and transmits screen data to the client device. At this time, the server device decrements the unused size of the window by 1. Namely, the unused size of the window is changed from 3 to 2 ((2) in FIG. 3). The server device then determines whether there are unused regions in the window every time a prescribed time interval has passed. When there are unused regions (namely, the unused size of the window is not 0), the server device captures the screen of the virtual desktop, transmits screen data to the client device, and decrements the unused size of the window by 1. When the unused size of the window is 0 ( (3) in FIG. 3), the server device does not transmit screen data any longer, and a drop frame of the screen of the virtual desktop occurs at a timing when the screen data is not transmitted ((4) in FIG. 3).

Meanwhile, upon receipt of an acknowledgement from the client device, the server device increments the unused size of the widow by 1 ( (5) in FIG. 3). As a result, the unused size of the window is changed from 0 to 1. Because the unused size is not 0, the server device captures the screen and transmits screen data to the client device at the timing of transmission of the next screen, and decrements the unused size by 1. As a result, the unused size is changed to 0 again ((6) in FIG. 3). In the example illustrated in FIG. 3, because the acknowledgement is received prior to the timing of transmission of the next screen ( (7) in FIG. 3), the unused size of the window is 1 at the timing of transmission of the next screen. Accordingly, the server device captures the screen, transmits screen data to the client device, and decrements the unused size by 1 ((8) in FIG. 3). In the processes that follow, when the server device transmits one piece of screen data, the server device decrements the unused size by 1, and when the server device receives the acknowledgement, the server device increments the unused size by 1, as described above. At each timing of transmission of screen data, when the unused size is not 0, the server device transmits screen data, and when the unused size is 0, the server device does not transmit screen data so as to cause a frame drop. As a result, the number of pieces of screen data transmitted from the server device at the same time is controlled so as to not exceed the window size, and this can suppress an overflow in the buffer of the client device or transmission of screen data exceeding an available band.

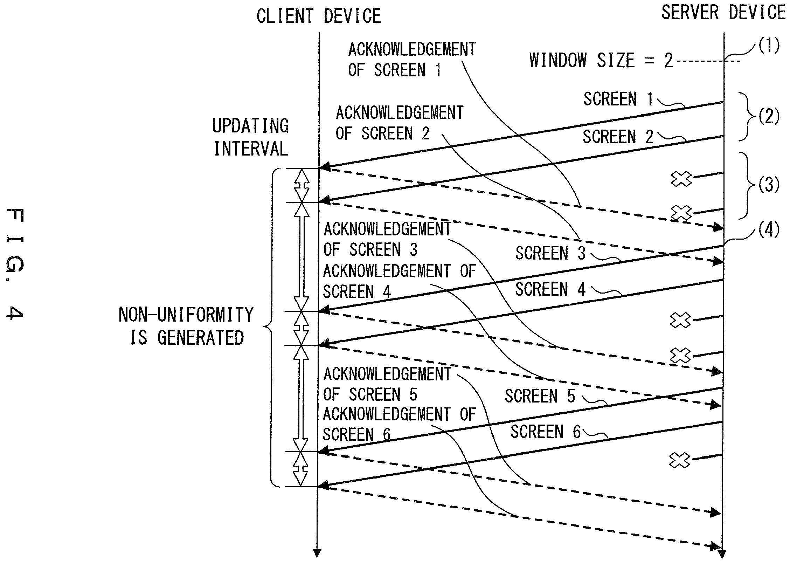

However, even when the drop frame and the sliding window as described above are used, non-uniformity of an updating interval of a screen occurs. FIG. 4 illustrates non-uniformity of an updating interval of a screen. In FIG. 4, a window size used in the sliding window is set to 2 ((1) in FIG. 4). Namely, a maximum value of an unused size of the window is 2. Similarly to the case described with reference to FIG. 3, the server device captures the screen of the virtual desktop and transmits screen data to the client device at prescribed time intervals, and decrements the unused size of the window by 1 in every transmission ((2) in FIG. 4). When the unused size of the window is 0, the server device does not transmit the screen data to the client device at this transmission timing so as to cause a drop frame ((3) in FIG. 4). Upon receipt of an acknowledgement from the client device, the unused size of the window is incremented by 1. Therefore, the server device captures the screen and transmits the screen data to the client device at the timing of transmission of the next screen, and decrements the unused size of the window by 1 again ((4) in FIG. 4). In the processes that follow, when the unused size of the window is 0 at the timing of transmission of the screen data, the server device does not transmit the screen data so as to cause a drop frame. Upon receipt of the acknowledgement from the client device, the server device increments the unused size of the window by 1. When the unused size of the window is not 0 at the timing of transmission of the screen data, the server device captures the screen, transmits the screen data to the client device, and decrements the unused size of the window by 1. As a result of the processes above, an image of the screen of the virtual desktop of the server device is provided to the client device. In this case, as illustrated in FIG. 4, non-uniformity of the updating interval of the display screen in the client device occurs. Stated another way, there are periods during which the updating interval of the display screen is short and the display screen is frequently updated and periods during which the updating interval of the display screen is long and the display screen is not frequently updated.

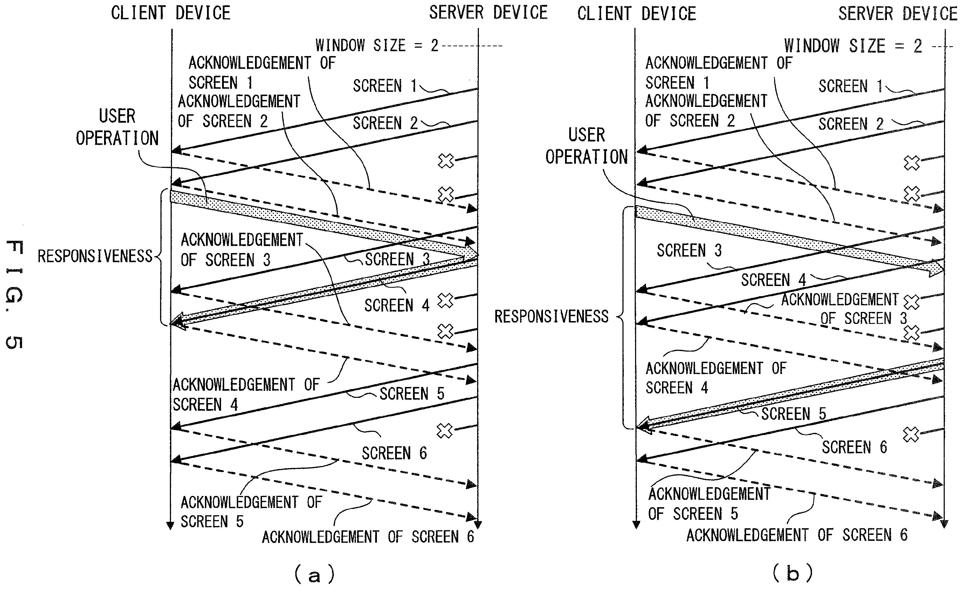

The above non-uniformity of the updating interval of the display screen influences responsiveness to, for example, an operation input by a user, and this results in a decrease in usability in the remote desktop. FIG. 5 illustrates responsiveness of a display screen to an operation input by a user. FIG. 5(a) illustrates an example in which a user inputs an operation to change the display content of the screen of the virtual desktop, such as the movement of a mouse cursor, and a signal reporting the operation is received by a server immediately before the server device transmits screen 4 data. In this case, the screen of the virtual desktop is changed in accordance with the content of the user's operation, and the content of the changed screen is transmitted to the user in the screen 4 data at the timing of transmission of the screen 4 data.

On the other hand, in FIG. 5(b), a user's operation is reported immediately after the server device transmits the screen 4 data. After the screen 4 data is transmitted, the unused size of the window is 0, and this causes two consecutive drop frames in the transmission of screen data. Consequently, screen data reflecting the user's operation is transmitted from the server device to the client device in transmission of screen 5 data after the server device receives an acknowledgement after the frame drops. Accordingly, in FIG. 5(b), a time period needed until the user's operation is reflected in the display screen of the client device greatly increases, compared with the case illustrated in FIG. 5(a). As described above, non-uniformity of the updating interval of the screen is not preferable, for example, because variation in responsiveness to the user's operation increases. Accordingly, in some embodiments, in order to make intervals at which the server device transmits screen data substantially uniform, the intervals at which the server device transmits screen data are set, for example, as described below.

First, in the client device, the size of a buffer stored by an application constructing a remote desktop environment with the server device is calculated using the following expression.

$$\text{Buffer size} = \text{available band} \times \text{round trip time} \quad \ldots(1)$$

In this expression, the buffer size is the buffer size of a buffer provided in the client device in order to store image data of the screen transmitted from the server device. Note that a buffer having the same size may also be provided in the server device. The available band is a bandwidth that the application constructing the remote desktop environment with the server device can use in communication between the server device and the client device. The round trip time is a time period needed for a round trip of communication between the server device and the client device. The round trip time may be, for example, a time period needed after the server device transmits a packet to the client device before a response to the packet is reported from the client device to the server device. Alternatively, the round trip time may be a time period needed after the client device transmits a packet to the server device before a response to the packet is reported from the server device to the client device.

The window size may be set using the following expression.

$$\text{Window size} = \left\lfloor \frac{\text{buffer size}}{\text{transmission data size}} \right\rfloor \quad \ldots(2)$$

In this expression, the window size is the size of a window used in the sliding window described above. For the buffer size, a value calculated using the above expression 1 is used. The transmission data size may be, for example, a value estimated as a maximum data size of image data of a screen (screen data) transmitted by the server device. The transmission data size is, for example, a value that can be set in advance on the basis of the resolution of the display screen of the display device of the client device, settings of the virtual desktop environment, communication speed, and the like. In one embodiment, the transmission data size may be a maximum data size in a case in which image data is generated in accordance with the resolution of the display screen of the display device included in the client device that is provided with the remote desktop. When the maximum data size of the screen data is used for the transmission data size, a number of pieces of screen data included in the buffer can be estimated, for example, by dividing the buffer size by the transmission data size, as expressed by the above expression 2. In the above expression 2, the window size is calculated by calculating the floor of a real number obtained by dividing the buffer size by the transmission data size and turning the floor into an integer so as to obtain an integer value.

A transmission interval of image data obtained by the server device capturing the screen (screen data) may be set using the following expression.

$$\text{Transmission interval} = \frac{\text{round trip time}}{\text{window size}}$$
$$= \frac{\text{transmission data size}}{\text{available band}}$$

$$\ldots (3)$$

In this expression, the transmission interval is an interval between transmission timings at which the server device captures the screen, and transmits screen data to the client device. As an example, the server device confirms whether the unused size of the window is 0 every time the transmission interval has passed. When the unused size is not 0, the server device captures the screen, transmits screen data to the client device, and decrements the window size by 1. The round trip time and the available band in expression 3 may be the same as those in the description of the above expression 1. The window size and the transmission data size may be the same as those in the description of the above expression 2.

When the window size and the transmission interval are set, for example, as described above, the round trip time has passed before a transmission timing after the window size becomes 0, and an acknowledgement is transmitted. This allows the next screen data to be transmitted without a drop frame so as to make transmission intervals of the screen data in the server device substantially uniform. As a result, in the client device, updating intervals of the screen can be made substantially uniform. The transmission interval calculated using expressions 1 to 3 is the shortest transmission interval that makes transmission intervals of the screen data substantially uniform. Accordingly, by using the transmission interval calculated using expressions 1 to 3, a situation can be suppressed in which transmission intervals are longer than needed in order to make the transmission intervals be substantially uniform.

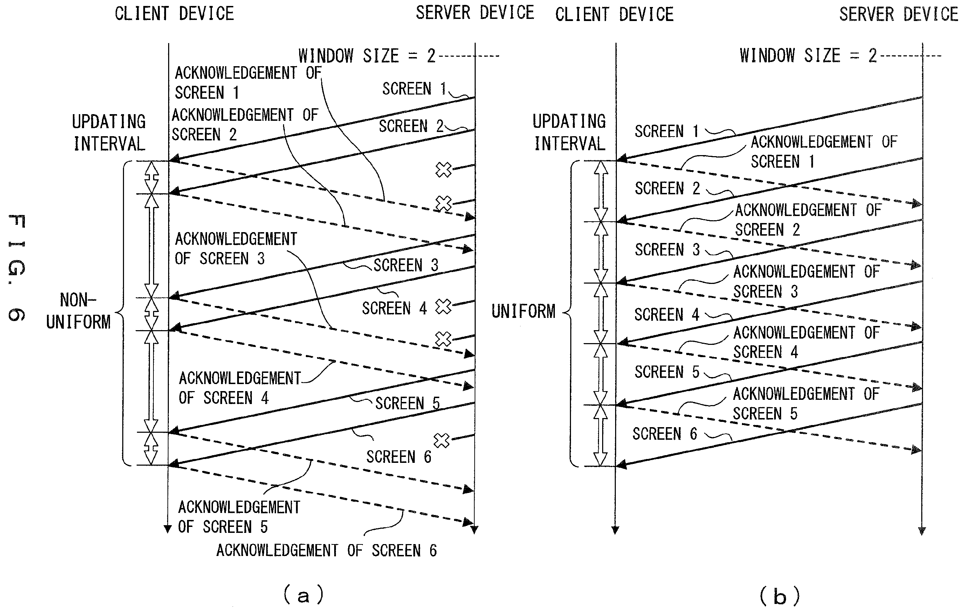

FIG. 6 illustrates that non-uniformity of updating intervals of a screen can be suppressed by using the above transmission interval according to the embodiments. FIG. 6(a) illustrates the same example as illustrated in FIG. 4 of transceiving of data between the client device and the server device for the purpose of comparison with FIG. 6(b). FIG. 6 (b) illustrates updating intervals of a screen in a case in which the above transmission interval according to the embodiments is used.

In FIG. 6(a), a drop frame occurs, and non-uniformity of updating intervals of a screen arises, as described with reference to FIG. 4. When the above transmission interval according to the embodiments is used, an acknowledgement is transmitted to the server device by the next transmission timing even when the window size is 0, as illustrated in FIG. 6(b). Therefore, a drop frame does not occur, and screen data can be transmitted to the client device at fixed intervals. As a result, updating intervals of the screen can be made substantially uniform in the client device.

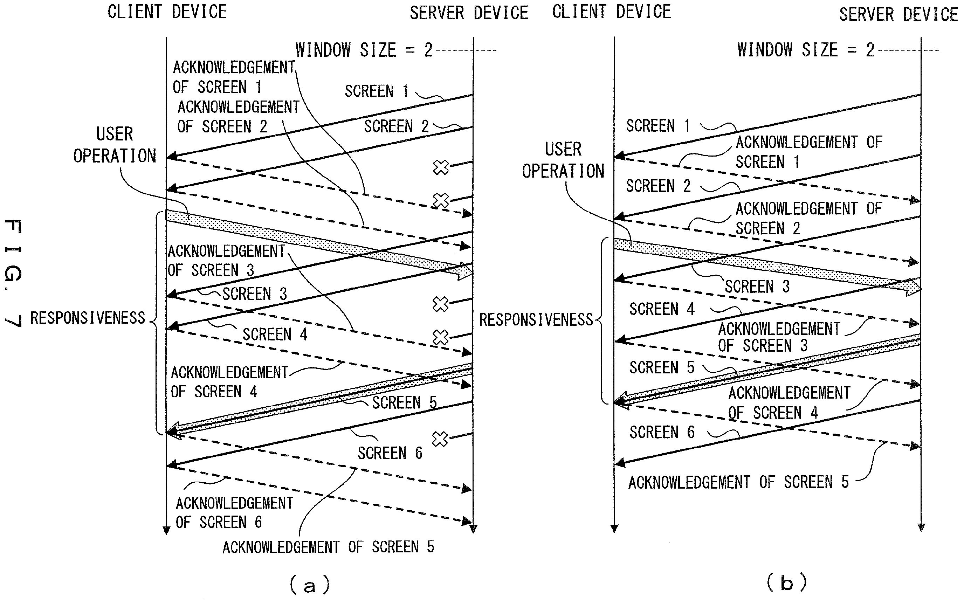

FIG. 7 illustrates that responsiveness to a user's operation of a screen can be improved by using the above transmission interval according to the embodiments. FIG. 7 (a) illustrates the same example as illustrated in FIG. 5(b) of responsiveness to an operation input by a user for the purpose of comparison with FIG. 7(b). FIG. 7(b) illustrates responsiveness to an operation input by a user in a case in which the above transmission interval according to the embodiments is used.

In FIG. 7(a), a user's operation is reported to the server device immediately after transmission of screen 4 data of screen 4. After the transmission of the screen 4 data, the unused size of the window is 0, and two drop frames occur in the transmission of screen data before an acknowledgement is received. Therefore, screen data reflecting the user's operation is not transmitted from the server device to the client device until screen 5 data is transmitted after the acknowledgement is received. Accordingly, in FIG. 7(a), it takes time for the user's operation to be reflected in the display screen of the client device. Also, in FIG. 7(b), the user's operation is reported to the server device immediately after transmission of screen 4 data of screen 4. However, because a transmission interval calculated using the above expression 3 is used in FIG. 7(b), even when the window size is 0, an acknowledgement is received by the next transmission timing, and consequently a drop frame does not occur. As a result, in FIG. 7(b), the screen data is transmitted from the server device to the client device every time the transmission interval has passed, and responsiveness is improved, compared with a case in which it takes a long time for the acknowledgement to be received, as illustrated in FIG. 7(a). In FIG. 7(b), a response to an operation can be transmitted to a user in a uniform response time.

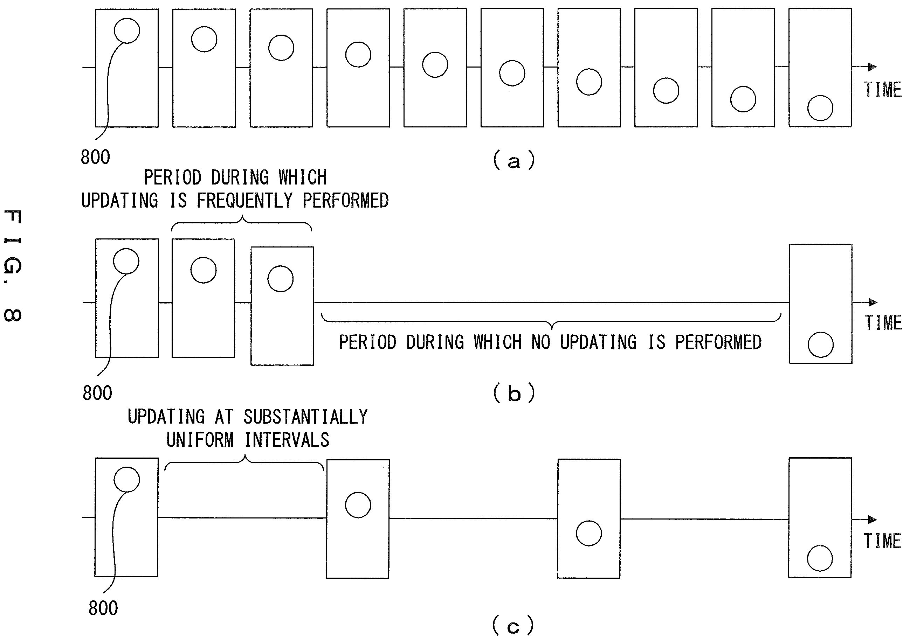

FIG. 8 illustrates a screen of a virtual desktop of a server device, and a display screen of a client device. FIG. 8 (a) illustrates the screen of the virtual desktop provided by the server device. FIG. 8(b) illustrates the display screen of the client device that is updated at the non-uniform updating intervals illustrated in FIG. 6(a). FIG. 8(c) illustrates the display screen of the client device that is updated at the updating intervals according to the embodiments illustrated in FIG. 6(b). FIG. 8(a) illustrates a state in which an object 800 moves from top to bottom on the screen of the virtual desktop by arranging the screens in a time series. Image data obtained by capturing the screen is transmitted to the client device. FIGS. 8(b) and 8(c) illustrate a state in which the image data of the screen received from the server device is displayed on the display screen of the client device. In FIG. 8(b), updating intervals of the screen are non-uniform, and therefore there is a long time period during which updating is not performed. Accordingly, the object 800 suddenly performs pronounced movement from top to bottom after the time period during which updating is not performed. In FIG. 8(c), the updating intervals of the screen are substantially uniform, and a change in position of the object 800 is uniformly obtained. As a result, a user easily confirms a change in the screen of the virtual desktop, such as a response to the user' s operation, on the basis of a change in the screen data displayed on the display screen of the client device.

As described above, in a case in which short updating intervals and long updating intervals of the screen exist, a situation exists in which, depending on the timing of a user's operation, the user needs to wait to obtain the display screen reflecting the user's operation during a long updating interval, (for example, FIG. 7(a)). As a result, a situation exists in which, even when updating intervals of the screen partially include short updating intervals, as illustrated in FIG. 6(a), it is a great disadvantage for a user of the remote desktop to wait during long updating intervals as opposed to short updating intervals. By eliminating non-uniformity of the updating intervals such that a case is avoided in which it takes a long time for a response to be transmitted, as illustrated in FIG. 7(a), for example, and that uniform responsiveness is maintained as a whole, the response speed or operability sensed by a user can be improved, and usability can also be improved. A user recognizes the influence of that user's operation on the display screen (for example, the speed of movement of a cursor, or the like) on the basis of a response to the user's operation when the updating intervals of the screen are uniform more easily than when the updating intervals are non-uniform. Accordingly, usability can be further improved when the updating intervals of the screen are uniform. In view of the foregoing, for example, it is useful that updating intervals of the screen can be made as short as possible and substantially uniform by using the transmission interval calculated using the above expressions 1 to 3.

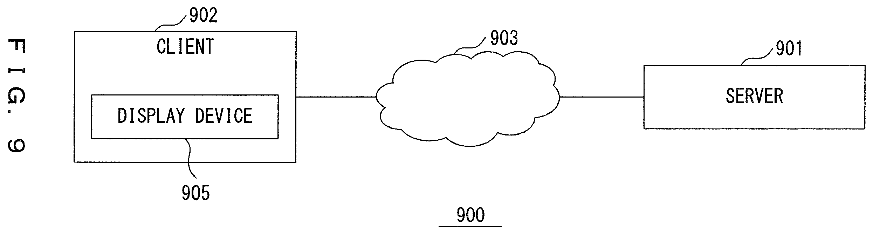

Embodiments in which the transmission interval obtained using the above expression 3 is used are described below. FIG. 9 illustrates a system 900 that provides the remote desktop according to the embodiments. The system 900 includes a server device 901 and a client device 902, and the server device 901 and the client device 902 are connected via a network 903. The client device 902 includes, for example, a display device 905 such as a display. The client device 902 receives, for example, screen data, which is image data obtained by capturing the screen of the virtual desktop, that is transmitted from the server device 901 via the network 903, and the client device 902 makes the display device 905 display the screen data.

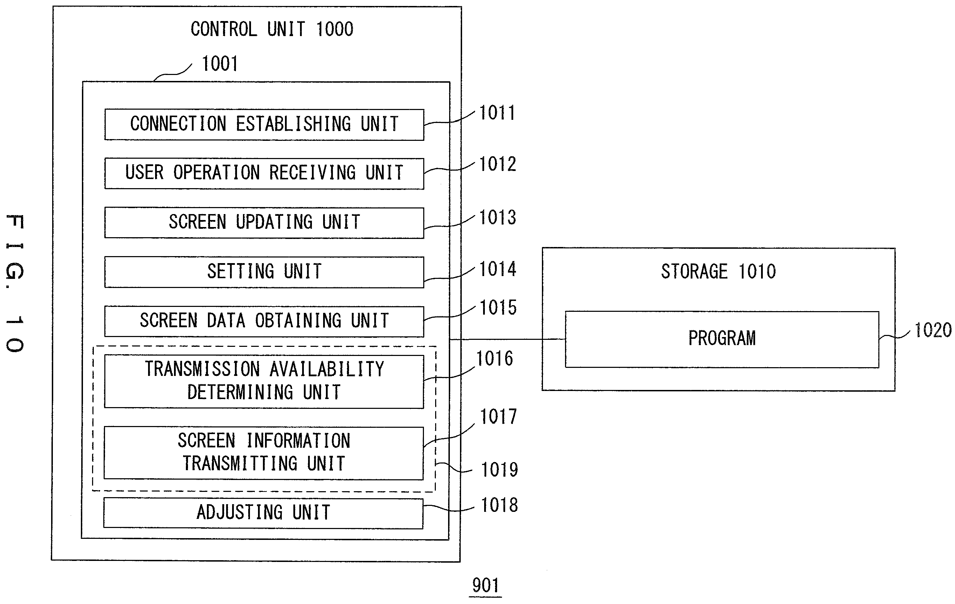

FIG. 10 illustrates a functional block configuration of the server device 901 according to the embodiments. The server device 901 includes, for example, a control unit 1000 and a storage 1010. The control unit 1000 of the server device 901 includes a function unit 1001 such as a connection establishing unit 1011, a user operation receiving unit 1012, a screen updating unit 1013, a setting unit 1014, or a screen data obtaining unit 1015. The control unit 1000 also includes a function unit 1001 such as a transmission availability determining unit 1016, a screen information transmitting unit 1017, an adjusting unit 1018, or a transmitting unit 1019. The storage 1010 of the server device 901 stores, for example, a program 1020. The control unit 1000 of the server device 901 functions as the function unit 1001 such as the connection establishing unit 1011, the user operation receiving unit 1012, the screen updating unit 1013, the setting unit 1014, or the screen data obtaining unit 1015 by reading and executing the program 1020. The control unit 1000 of the server device 901 functions as the function unit 1001 such as the transmission availability determining unit 1016, the screen information transmitting unit 1017, the adjusting unit 1018, or the transmitting unit 1019, by reading and executing the program 1020. The transmission availability determining unit 1016 and the screen information transmitting unit 1017 also function as the transmitting unit 1019. As an example, the connection establishing unit 1011 establishes communication connection with the client device 902. The user operation receiving unit 1012 receives a signal reporting a user's operation input via the client device 902 to the virtual desktop environment provided by the server device 901. The screen updating unit 1013 performs processing in accordance with the signal reporting the user's operation received by the user operation receiving unit 1012, and updates the content displayed on the screen of the virtual desktop. Details of the other components of the function unit 1001 are described later.

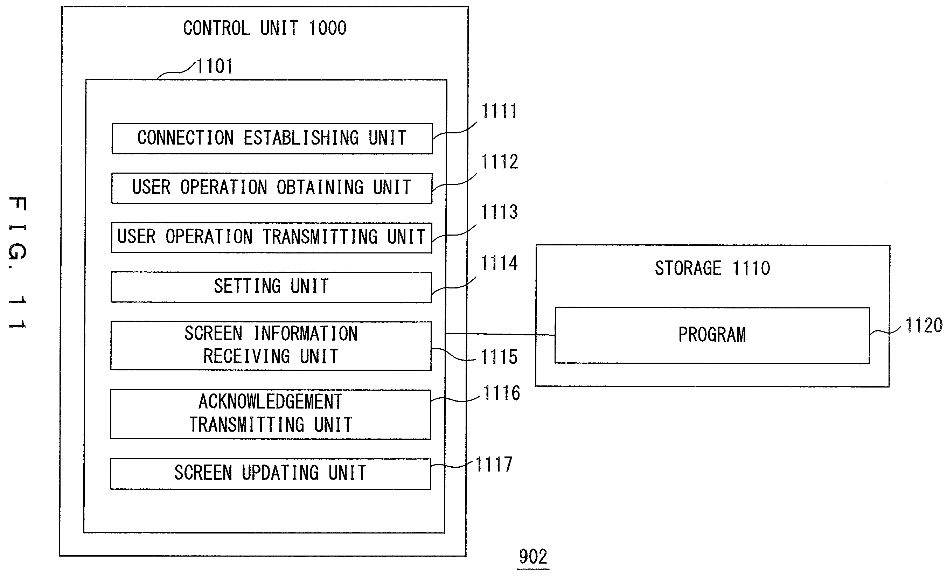

FIG. 11 illustrates a functional block configuration of the client device 902 according to the embodiments. The client device 902 includes, for example, a control unit 1100 and a storage 1110. The control unit 1100 of the client device 902 includes a function unit 1101 such as a connection establishing unit 1111, a user operation obtaining unit 1112, a user operation transmitting unit 1113, a setting unit 1114, or a screen information receiving unit 1115. The control unit 1100 of the client device 902 also includes a function unit 1101 such as an acknowledgement transmitting unit 1116 or a screen updating unit 1117. The storage 1110 of the client device 902 stores, for example, a program 1120. The control unit 1100 of the client device 902 functions as the function unit 1101 such as the connection establishing unit 1111, the user operation obtaining unit 1112, the user operation transmitting unit 1113, the setting unit 1114, or the screen information receiving unit 1115, by reading and executing the program 1120. The control unit 1100 of the client device 902 also functions as the function unit 1101 such as the acknowledgement transmitting unit 1116 or the screen updating unit 1117 by reading and executing the program 1120. As an example, the connection establishing unit 1111 establishes communication connection with the server device 901. The user operation obtaining unit 1112 obtains a user's operation input via the client device 902 to the virtual desktop provided by the server device 901. The user operation transmitting unit 1113 transmits, to the server device 901, a signal reporting the user's operation obtained by the user operation obtaining unit 1112. Details of the other respective components of the function unit 1101 are described later.

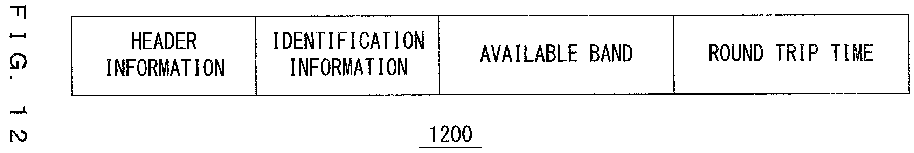

FIG. 12 illustrates setting information 1200 according to the embodiments. The setting information 1200 is, for example, information reporting information of a network environment used in communication between the server device 901 and the client device 902. The setting information 1200 includes, for example, header information, identification information, an available band, and a round trip time. The header information stores, for example, information used to establish communication between the server device 901 and the client device 902. The header information may include, for example, information such as an IP header or a TCP header (UDP header). The identification information stores, for example, information distinguishing the setting information 1200 from screen information 1300 and an acknowledgement 1400, described later. These pieces of information may be configured so as to be distinguished from each other, for example, by storing the value "0" in the identification information of the setting information 1200 and storing the value "1" in the identification information of the screen information 1300 and the acknowledgement 1400. The available band is, for example, a bandwidth that an application constructing the remote desktop environment can use in communication between the server device and the client device, as described above, and stores information relating to the bandwidth. The available band is measured, for example, by the client device 902 or the server device 901. The round trip time is, for example, a time period needed for a round trip of a packet between the server device and the client device, as described above, and stores information relating to the round trip time. The round trip time is measured, for example, by the server device 901 or the client device 902.

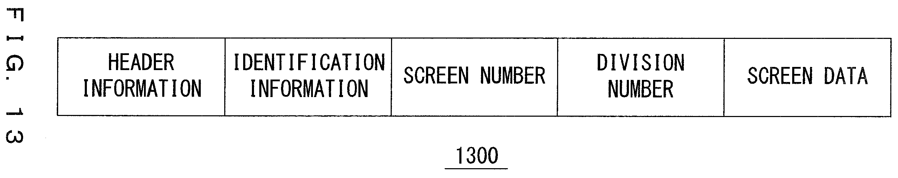

FIG. 13 illustrates the screen information 1300 according to the embodiments. The screen information 1300 is, for example, information reporting, to the client device 902, image data of the screen of the virtual desktop captured by the server device 901. The screen information 1300 includes, for example, header information, identification information, a screen number, a division number, and screen data. The header information stores, for example, information used to establish communication between the server device 901 and the client device 902. The header information may include, for example, information such as an IP header or a TCP header (UDP header). The identification information stores, for example, information distinguishing the setting information 1200 described above from the screen information 1300 and the acknowledgement 1400 described below. These pieces of information may be configured to be distinguished from each other, for example, by storing the value "0" in the identification information of the setting information 1200 and storing the value "1" in the identification information of the screen information 1300 and the acknowledgement 1400. The screen number stores, for example, a sequence number that is sequentially allocated to the screen information 1300 transmitted from the server device 901 to the client device 902. The screen number may be, for example, a number that is sequentially allocated to the screen information 1300 transmitted after the server device 901 commences providing the client device 902 with the remote desktop. The division number stores a number that is allocated to divided screen data obtained, for example, when the server device 901 divides screen data of one captured screen, and transmits the divided screen data to the client device 902. The screen data is, for example, image data of the screen of the virtual desktop captured by the server device 901. In a case in which the screen data is divided and transmitted to the client device 902, the screen data stores the divided screen data that corresponds to the division number.

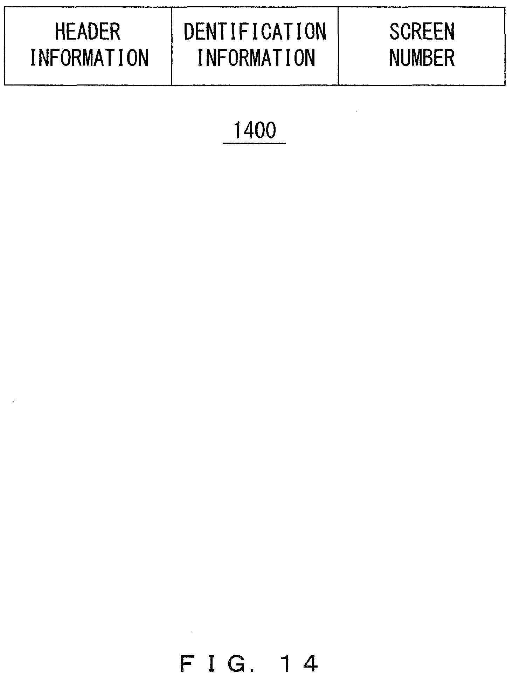

FIG. 14 illustrates the acknowledgement 1400 according to the embodiments. The acknowledgement 1400 is, for example, information reporting reception of screen data to the server device 901 when the client device 902 receives the screen data from the server device 901. The acknowledgement 1400 includes, for example, header information, identification information, and a screen number. The header information stores, for example, information used to establish communication between the server device 901 and the client device 902. The header information may include, for example, information such as an IP header or a TCP header (UDP header). The identification information stores, for example, information distinguishing the setting information 1200 described above from the screen information 1300 and the acknowledgement 1400. These pieces of information may be configured to be distinguished from each other, for example, by storing the value "0" in the identification information of the setting information 1200 and storing the value "1" in the identification information of the screen information 1300 and the acknowledgement 1400. The screen number stores, for example, a number stored in the screen number of the screen information 1300 when the client device 902 normally receives the screen information 1300 including the screen data from the server device 901.

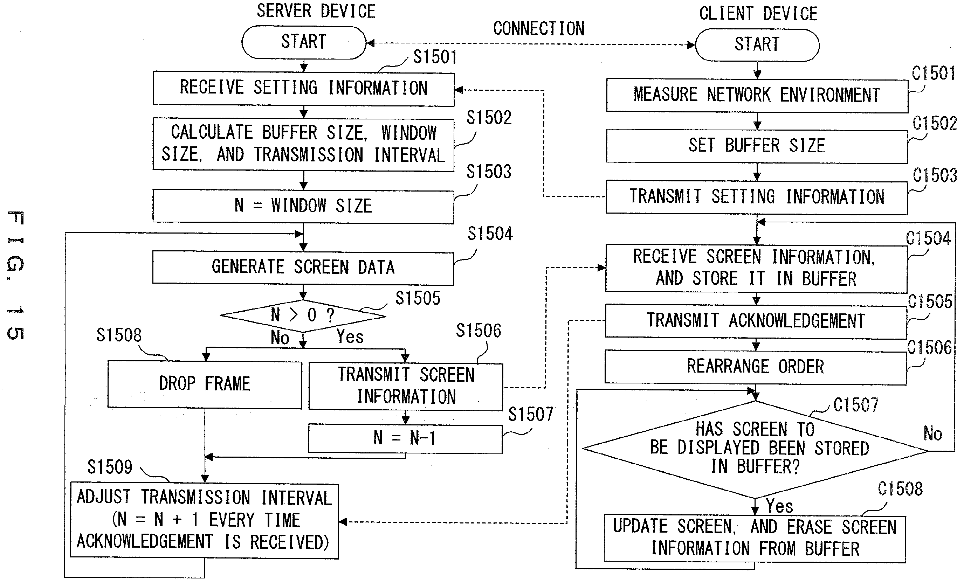

FIG. 15 illustrates a process of transceiving screen data that is performed by the control unit 1000 of the server device 901 and the control unit 1100 of the client device 902 in the system 900 providing the remote desktop according to a first embodiment. The operation flow on the left-hand side of FIG. 15 is a process performed by the server device 901, and the operation flow on the right-hand side of FIG. 15 is a process performed by the client device 902. In order to easily distinguish the process performed by the server device 901 from the process performed by the client device 902, in FIG. 15 and the description thereof, "S" is added to respective steps of the process performed by the server device 901, and "C" is added to respective steps of the process performed by the client device 902.

The process performed by the control unit 1000 of the server device 901 is described below with reference to the operation flow on the left-hand side of FIG. 15. The operation flow of the process performed by the server device 901 in FIG. 15 is performed, for example, by the control unit 1000 of the server device 901 reading and executing the program 1020 stored in the storage 1010. In one embodiment, when, in the client device 902, an application constructing the remote desktop environment with the server device 901 is executed so as to establish communication between the server device 901 and the client device 902, the operation flow on the left-hand side of FIG. 15 is initiated.

In step S1501, the control unit 1000 of the server device 901 receives the setting information 1200 from the client device 902. In step S1502, the control unit 1000 of the server device 901 calculates a value of a buffer size according to the above expression 1 by using the available band and the round trip time included in the setting information 1200. The buffer size calculated according to expression 1 is the buffer size of the buffer that is provided in the client device 902 in order to store the screen information 1300 transmitted by the server device 901. A buffer having the same size as the calculated buffer size of the buffer provided in the client device 902 may be provided in the server device 901. In other words, the buffer of the server device 901 may also be provided so as to have the buffer size calculated using the above expression 1. The buffer provided in the server device 901 is used for example to transmit the screen information 1300 to the client device 902. The control unit 1000 of the server device 901 then calculates a value of the window size according to the above expression 2 by using, for example, a transmission data size stored in advance in the storage 1010, and the calculated buffer size. Further, the control unit 1000 of the server device 901 calculates a value of the transmission interval according to the above expression 3 by using the obtained window size and the round trip time or by using the transmission data size and the available band. The control unit 1000 of the server device 901 respectively sets the buffer size, the window size, and the transmission interval to the above calculated values of the buffer size, the window size, and the transmission interval.

In step S1503, the control unit 1000 of the server device 901 sets N, which is a variable storing a value of an unused size of the window, to the set value of the window size. In step S1504, the control unit 1000 of the server device 901 captures a screen of a virtual desktop provided to the connected client device 902, performs a process such as compression, and generates screen data to be transmitted to the client device 902. In step S1505, the control unit 1000 of the server device 901 determines whether N is greater than 0. Stated another way, the control unit 1000 of the server device 901 determines whether there is an unused region in the window. When N is greater than 0 and there is an unused region (Yes in step S1505), the flow moves on to step S1506.

In step S1506, the control unit 1000 of the server device 901 generates the screen information 1300 including the screen data generated in step S1504, and transmits the screen information 1300 to the client device 902. In the screen number of the screen information 1300, a sequence number that is sequentially allocated to the screen information 1300 transmitted from the server device 901 to the client device 902 is stored. The screen number may be, for example, a number that is sequentially allocated to the screen information 1300 transmitted after the server device 901 commences providing the client device 902 with the remote desktop. In a case in which the screen data is divided and transmitted, the screen information 1300 including a division number indicating which portion of the screen data the divided screen data corresponds to is generated and transmitted. In step S1507, the control unit 1000 of the server device 901 calculates N = N-1 in order to decrement the unused size by the number of pieces of the screen information 1300 transmitted to the client device 902, and updates the unused size (the value N). When the unused size (the value N) is updated, the flow moves on to step S1509.

When N is not greater than 0 and there are no unused regions in the window in step S1505 (No in step S1505), the flow moves on to step S1508. In step S1508, the control unit 1000 of the server device 901 does not transmit the screen data generated in step S1504 to the client device 902, and for example discards the screen data, and consequently the control unit 1000 of the server device 901 causes a drop frame of the screen data generated in step S1504. In step S1509, the control unit 1000 of the server device 901 adjusts the transmission interval by waiting until the transmission interval set in step S1502 has passed after the control unit 1000 generates the screen data in step S1504.

In step S1509, it is assumed that the acknowledgement 1400 is received from the client device 902 during a time period after the screen data is generated in step S1504 before the transmission interval has passed. In this case, every time the acknowledgement 1400 is received, the control unit 1000 of the server device 901 calculates N = N + 1, and updates the unused size (the value N). In other words, when the acknowledgement 1400 is received, the unused size of the window increases by the number of the acknowledgements 1400, and therefore the control unit 1000 of the server device 901 updates the unused size (the value N) by incrementing N by 1. In step S1509, when the transmission interval set in step S1502 has passed after the screen data is generated in step S1504, the flow returns to step S1504.

The process performed by the control unit 1100 of the client device 902 is described below with reference to the operation flow on the right-hand side of FIG. 15. The operation flow of the process performed by the client device 902 in FIG. 15 is performed, for example, by the control unit 1100 of the client device 902 reading and executing the program 1120 stored in the storage 1110. In one embodiment, when, in the client device 902, an application constructing the remote desktop environment with the server device 901 is executed, and communication between the server device 901 and the client device 902 is established, the operation flow on the right-hand side of FIG. 15 is initiated.

In step C1501, the control unit 1100 of the client device 902 measures a network environment. The control unit 1100 of the client device 902 measures a round trip time of communication with the server device 901, for example, by measuring a time period after a packet is transmitted to the server device 901 before a response to the packet is received from the server device 901. The client device 902 also measures, for example, a bandwidth available to an application constructing the remote desktop environment with the server device 901 as an available band. In step C1502, the control unit 1100 of the client device 902 calculates and sets a buffer size of a buffer that stores information included in the screen information 1300 transmitted from the server device 901 according to the above expression 1 by using the obtained round trip time and available band. In step C1503, the control unit 1100 of the client device 902 generates the setting information 1200 on the basis of the round trip time and the available band measured in step C1501, and transmits the setting information 1200 to the server device 901. In step C1504, the control unit 1100 of the client device 902 receives the screen information 1300 transmitted from the server device 901, and stores the screen information 1300 in the buffer. The information stored in the buffer may be a portion of the screen information 1300, for example, the screen number and the screen data.

In step C1505, the control unit 1100 of the client device 902 generates the acknowledgement 1400 including the screen number included in the received screen information 1300, and transmits the acknowledgement 1400 to the server device 901. In step C1506, the control unit 1100 of the client device 902 rearranges plural pieces of the screen information 1300 stored in the buffer in order of the screen number. As a result, the plural pieces of the screen information 1300 stored in the buffer are rearranged in order of transmission from the server device 901.

In step C1507, the control unit 1100 of the client device 902 determines whether the screen information 1300 to be displayed has been stored in the buffer. As an example, when the screen data is being displayed on the display screen, the screen information 1300 to be displayed is the screen information 1300 including a screen number that follows the number of the displayed screen data. Assume, for example, that the screen data is displayed on the display screen of the display device 905 after the remote desktop environment has been constructed, and that the screen number of the displayed screen data is "20". In this case, the screen information 1300 having the next screen number "21" may be the screen information 1300 to be displayed. When the screen data has not been displayed on the display screen, and the first screen information 1300 transmitted from the server device 901 is displayed, the screen information 1300 to be displayed is the screen information 1300 including the screen number indicating the first screen information 1300. As an example, in a case in which screen numbers increasing in ascending order from 1 are allocated to plural pieces of the screen information 1300 transmitted after the remote desktop environment has been constructed, the screen information 1300 storing "1" in the screen number of the screen information 1300 is the screen information 1300 to be displayed. In step C1507, when the screen information 1300 to be displayed has not been stored in the buffer (No in step C1507), the flow returns to step C1504, and reception of the new screen information 1300 is awaited. When the screen information 1300 to be displayed has been stored in the buffer (Yes in step C1507), the flow moves on to step C1508.

In step C1508, the control unit 1100 of the client device 902 updates the display screen by displaying, on the display screen, the screen data included in the screen information 1300 to be displayed that has been determined in step C1507. The control unit 1100 of the client device 902 then erases the screen information 1300 including the displayed screen data from the buffer, and the flow returns to step C1507.

According to the operation flow of FIG. 15 described above, the server device 901 generates the screen information 1300 at transmission intervals calculated using the above expression 3, and transmits the screen information 1300 to the client device 902. The transmission interval has been set for example to have a length that suppresses a drop frame and makes the transmission intervals substantially uniform, and this allows the server device 901 to transmit the screen information 1300 to the client device 902 every time the set transmission interval has passed. Consequently, the client device 902 can receive the screen information 1300 at substantially uniform intervals. As a result, the display screen of the client device 902 can be updated at substantially uniform updating intervals, and usability is improved.

In the processes of step S1501 to step S1503 in the operation flow of FIG. 15 described above, the control unit 1000 of the server device 901 functions, for example, as the setting unit 1014. In the process of step S1504, the control unit 1000 of the server device 901 functions, for example, as the screen data obtaining unit 1015. In the process of step S1505, the control unit 1000 of the server device 901 functions, for example, as the transmission availability determining unit 1016. In the processes of steps S1506 and S1507, the control unit 1000 of the server device 901 functions, for example, as the screen information transmitting unit 1017. In the processes of steps S1508 and S1509, the control unit 1000 of the server device 901 functions, for example, as the adjusting unit 1018. The transmission availability determining unit 1016 and the screen information transmitting unit 1017 function as the transmitting unit 1019 in the processes of steps S1505 to S1507.

In the processes of steps C1501 to C1503, the control unit 1100 of the client device 902 functions, for example, as the setting unit 1114. In the process of step C1504, the control unit 1100 of the client device 902 functions, for example, as the screen information receiving unit 1115. In the process of step C1505, the control unit 1100 of the client device 902 functions, for example, as the acknowledgement transmitting unit 1116. In the processes of steps C1506 to C1508, the control unit 1100 of the client device 902 functions, for example, as the screen updating unit 1117.

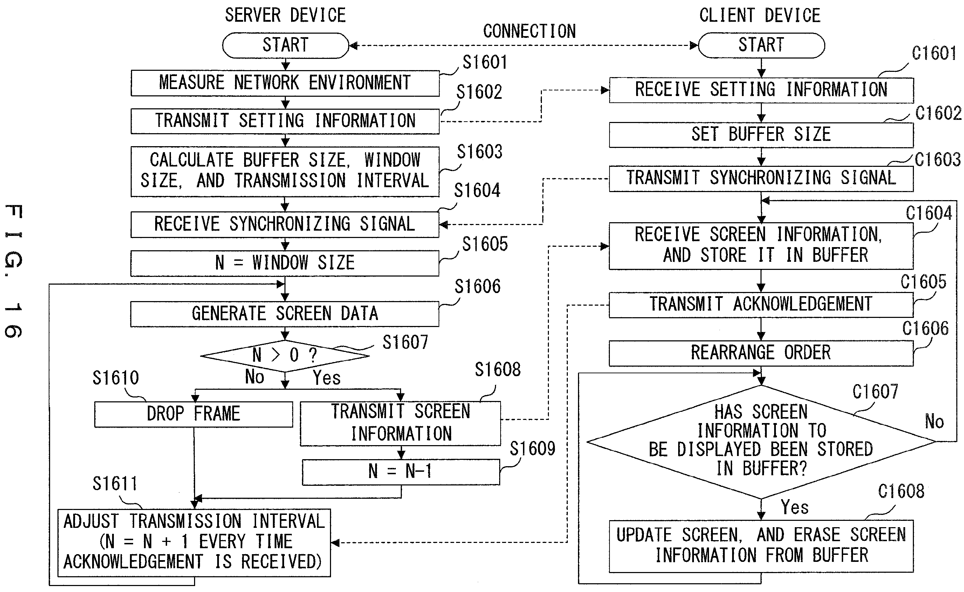

A second embodiment is described below with reference to FIG. 16. In the first embodiment, a case in which the client device 902 measures the network environment has been described as an example. In the second embodiment, a case in which the server device 901 measures the network environment will be described.

FIG. 16 illustrates a process of transceiving screen data that is performed by the control unit 1000 of the server device 901 and the control unit 1100 of the client device 902 in the system 900 providing the remote desktop environment according to the second embodiment. The operation flow on the left-hand side of FIG. 16 is a process performed by the server device 901, and the operation flow on the right-hand side is a process performed by the client device 902. In order to easily distinguish the process performed by the server device 901 from the process performed by the client device 902, in FIG. 16 and the description thereof, "S" is added to respective steps of the process performed by the server device 901, and "C" is added to respective steps of the process performed by the client device 902.

With reference to the operation flow on the left-hand side of FIG. 16, the process performed by the control unit 1000 of the server device 901 is first described. The operation flow of the process performed by the server device 901 in FIG. 16 is performed, for example, by the control unit 1000 of the server device 901 reading and executing the program 1020 stored in the storage 1010. In one embodiment, in the client device 902, when an application constructing the remote desktop environment with the server device 901 is executed, and communication between the server device 901 and the client device 902 is established, the operation flow on the left-hand side of FIG. 16 is initiated.

In step S1601, the control unit 1000 of the server device 901 measures a network environment. The control unit 1000 of the server device 901 measures a round trip time of communication with the client device 902, for example, by measuring a time period after the server device 901 transmits a packet to the client device 902 until a response to the packet is received from the client device 902. The server device 901 measures, for example, a bandwidth available to the application constructing the remote desktop environment with the client device 902 as an available band. In step S1602, the control unit 1000 of the server device 901 generates the setting information 1200 including the measured round trip time and available band, and transmits the setting information 1200 to the client device 902.

In step S1603, the control unit 1000 of the server device 901 calculates a value of a buffer size according to the above expression 1 on the basis of the available band and the round trip time measured in step S1601. The buffer size calculated according to expression 1 is the buffer size of the buffer provided in the client device 902 in order to store the screen information 1300 transmitted from the server device 901. A buffer having the same size as the calculated buffer size of the buffer provided in the client device 902 may be provided in the server device 901. The buffer provided in the server device 901 is used to transmit the screen information 1300 to the client device 902. In other words, the buffer of the server device 901 may also be provided so as to have the buffer size calculated according to the above expression 1. Then, the control unit 1000 of the server device 901 calculates a value of the window size according to the above expression 2 by using a transmission data size stored in advance in the storage 1010 and the calculated buffer size. The control unit 1000 of the server device 901 further calculates a value of the transmission interval according to the above expression 3 by using the obtained window size and round trip time, or by using the transmission data size and the available band. The control unit 1000 of the server device 901 respectively sets the buffer size, the window size, and the transmission interval to the above calculated values of the buffer size, the window size, and the transmission interval.

In step S1604, the control unit 1000 of the server device 901 awaits reception of a synchronizing signal from the client device 902. In the first embodiment, when the server device 901 receives the setting information 1200 in step S1501, the processes of steps C1501 to C1503 have been completed in the client device 902. Accordingly, when the server device 901 receives the setting information 1200 in step S1501, the client device 902 is ready to receive the screen information 1300 transmitted from the server device 901 in step C1504. On the other hand, in the second embodiment, after the client device 902 receives the setting information 1200 transmitted from the server device 901, the process performed by the client device 902 proceeds. Therefore, when the process performed by the server device 901 moves on to step S1604, the client device 902 may be unready to receive the screen information 1300. Thus, in the second embodiment, after the server device 901 receives, from the client device 902, a synchronizing signal indicating that the client device 902 is ready to receive the screen information 1300 in step S1604, the process moves on to step S1605.

The processes of steps S1605 to S1611 respectively correspond, for example, to the processes of steps S1503 to S1509 performed by the server device 901 in FIG. 15. As an example, the control unit 1000 of the server device 901 may perform processes similar to the corresponding processes of steps S1503 to S1509 in steps S1605 to S1611. As a result of the processes of steps S1605 to S1611, the server device 901 transmits the screen information 1300 to the client device 902. The server device 901 also controls transmission intervals of the screen information 1300 according to the window size and the transmission interval set in step S1603, and the acknowledgement 1400 received from the client device 902.

The process performed by the control unit 1100 of the client device 902 is described next with reference to the operation flow on the right-hand side of FIG. 16. The operation flow of the process performed by the client device 902 in FIG. 16 is performed, for example, by the control unit 1100 of the client device 902 reading and executing the program 1120 stored in the storage 1110. In one embodiment, in the client device 902, when an application constructing the remote desktop environment with the server device 901 is executed, and communication between the server device 901 and the client device 902 is established, the operation flow on the right-hand side of FIG. 16 is initiated.

In step C1601, the control unit 1100 of the client device 902 receives the setting information 1200 from the server device 901. In step C1602, the control unit 1100 of the client device 902 calculates and sets a buffer size of a buffer using the above expression 1 on the basis of a round trip time and an available band included in the received setting information 1200. The buffer is used for example to store information included in the screen information 1300 transmitted from the server device 901 in the client device 902. Then, in step C1603, the control unit 1100 of the client device 902 generates a synchronizing signal indicating that the client device 902 is ready to receive the screen information 1300 from the server device 901, and transmits the synchronizing signal to the server device 901.

The processes of steps C1604 to C1608 respectively correspond to the processes of steps C1504 to C1508 performed by the client device 902 in FIG. 15. As an example, the control unit 1100 of the client device 902 may perform processes similar to the corresponding processes of steps C1504 to C1508 in steps C1604 to C1608. As a result of the processes of steps C1604 to C1608, upon receipt of the screen information 1300, the client device 902 stores the screen information 1300 in the buffer, and transmits the acknowledgement 1400 of the screen information 1300 to the server device 901. Then, the client device 902 displays screen data of the screen information 1300 stored in the buffer on the display screen of the display device 905 in order of the screen number. The client device 902 also erases the screen information 1300 including the displayed screen data from the buffer.

According to the operation flow of FIG. 16 described above, the server device 901 generates the screen information 1300 at the transmission intervals calculated using the above expression 3, and transmits the screen information 1300 to the client device 902. The transmission interval has been set for example so as to have a length that suppresses a drop frame and makes the transmission intervals substantially uniform, and this allows the server device 901 to transmit the screen information 1300 to the client device 902 every time the set transmission interval has passed. Consequently, the client device 902 can receive the screen information 1300 at substantially uniform intervals. As a result, the display screen of the client device 902 can be updated at substantially uniform updating intervals, and usability is improved.

In the processes of steps S1601 to S1605 in the operation flow of FIG. 16 described above, the control unit 1000 of the server device 901 functions, for example, as the setting unit 1014. In the process of step S1606, the control unit 1000 of the server device 901 functions, for example, as the screen data obtaining unit 1015. In the process of step S1607, the control unit 1000 of the server device 901 functions, for example, as the transmission availability determining unit 1016. In the processes of steps S1608 and S1609, the control unit 1000 of the server device 901 functions, for example, as the screen information transmitting unit 1017. In the processes of steps S1610 and S1611, the control unit 1000 of the server device 901 functions, for example, as the adjusting unit 1018. The transmission availability determining unit 1016 and the screen information transmitting unit 1017 function as the transmitting unit 1019 in the processes of steps S1607 to S1609.

In the processes of steps C1601 to C1603, the control unit 1100 of the client device 902 functions, for example, as the setting unit 1114. In the process of step C1604, the control unit 1100 of the client device 902 functions, for example, as the screen information receiving unit 1115. In the process of step C1605, the control unit 1100 of the client device 902 functions, for example, as the acknowledgement transmitting unit 1116. In the processes of steps C1606 to C1608, the control unit 1100 of the client device 902 functions, for example, as the screen updating unit 1117.

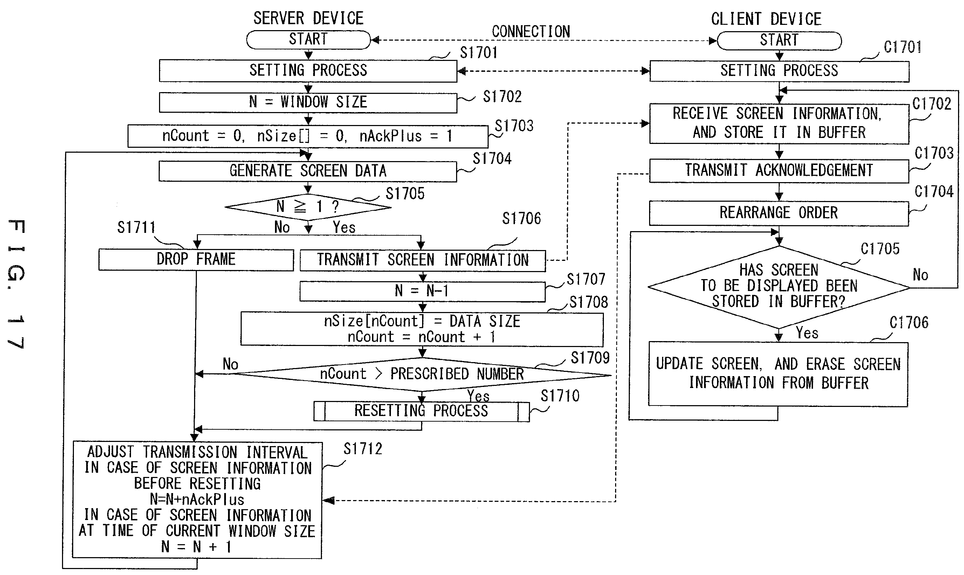

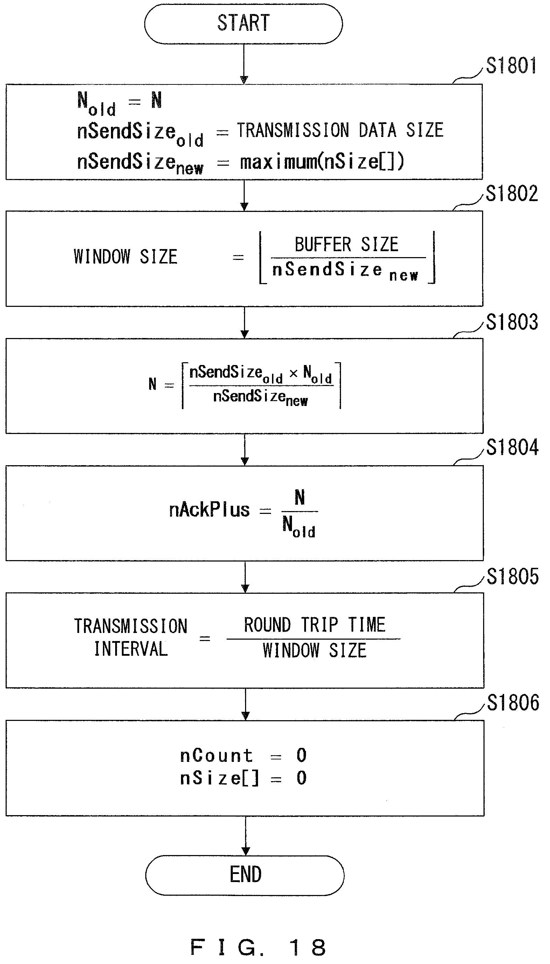

A third embodiment is described next with reference to FIGS. 17 and 18. In the third embodiment, a case in which the transmission interval is reset is described. FIG. 17 illustrates a process of transceiving screen data that is performed by the control unit 1000 of the server device 901 and the control unit 1100 of the client device 902 in the system 900 providing the remote desktop according to the third embodiment. The operation flow on the left-hand side of FIG. 17 is a process performed by the server device 901, and the operation flow on the right-hand side is a process performed by the client device 902. In order to easily distinguish the process performed by the server device 901 from the process performed by the client device 902, in FIGS. 17 and 18 and the description thereof, "S" is added to respective steps of the process performed by the server device 901, and "C" is added to respective steps of the process performed by the client device 902.

The process performed by the control unit 1000 of the server device 901 is described first, with reference to the operation flow on the left-hand side of FIG. 17. The operation flow of the process performed by the server device 901 in FIG. 17 is performed by the control unit 1000 of the server device 901 reading and executing the program 1020 stored in the storage 1010. In one embodiment, in the client device 902, when an application constructing the remote desktop environment with the server device 901 is executed, and communication between the server device 901 and the client device 902 is established, the operation flow on the left-hand side of FIG. 17 is initiated.

In step S1701, the control unit 1000 of the server device 901 performs a setting process. As an example, when the client device 902 measures a network environment, the control unit 1000 of the server device 901 may perform the processes of steps S1501 and S1502 of FIG. 15 in the setting process. As another example, when the server device 901 measures the network environment, the control unit 1000 of the server device 901 may perform the processes of steps S1601 to S1604 of FIG. 16 in the setting process. In step S1702, the control unit 1000 of the server device 901 sets N, which is a variable storing an unused size of a window, to a value of a window size set in the setting process. In step S1703, the control unit 1000 of the server device 901 sets nCount and nSize [ ] to 0, and sets nAckPlus (also referred to as a "correction added value") to 1. Here, nCount, nSize [ ], and nAckPlus are variables used in the processes below, and are described later in detail.

In step S1704, the control unit 1000 of the server device 901 captures a screen of a virtual desktop providing the connected client device 902 with a remote desktop. The control unit 1000 of the server device 901 then performs processing such as compression on obtained image data so as to generate screen data to be transmitted to the client device 902. In step S1705, the control unit 1000 of the server device 901 determines whether N is greater than or equal to 1. Stated another way, the control unit 1000 of the server device 901 determines whether there is an unused region in the window.

When N is less than 1 and there are no unused regions (No in step S1705), the flow moves on to step S1711. In step S1711, the control unit 1000 of the server device 901 does not transmit the screen information 1300 generated in step S1704 to the client device 902, and discards the screen information 1300 so as to cause a drop frame of the screen data generated in step S1704.

When N is greater than or equal to 1 and there is an unused region in step S1705 (Yes in step S1705), the flow moves on to step S1706. In step S1706, the control unit 1000 of the server device 901 generates the screen information 1300 including the screen data generated in step S1704 and a sequence number allocated to the screen data, and transmits the screen information 1300 to the client device 902. In a case in which the screen data is divided, and divided screen data is transmitted, the control unit 1000 of the server device 901 generates the screen information 1300 including the divided screen data and a division number indicating which portion of the screen data the divided screen data corresponds to, and transmits the screen information 1300. In step S1707, the control unit 1000 of the server device 901 calculates N = N - 1, and updates the unused size (the value N). When the unused size (the value N) is updated, the flow moves on to step S1708.

In step S1708, the control unit 1000 of the server device 901 stores data size of the transmitted screen information 1300 in nSize[nCount], and records a data size of the screen information 1300 that corresponds to the current value nCount. Then, the control unit 1000 of the server device 901 increments the value nCount by 1, and updates the value nCount. In step S1709, the control unit 1000 of the server device 901 determines whether the value nCount is greater than a prescribed number. When the value nCount is less than or equal to the prescribed number (No in step S1709), the flow moves on to step S1712. When the value nCount is greater than the prescribed number (Yes in step S1709), the flow moves on to step S1710.

In step S1710, the control unit 1000 of the server device 901 performs a resetting process, as described later in detail with reference to FIG. 18. For example, values of the window size, the transmission interval, and the like are reset in the resetting process. The value N indicating a current unused size is reset in accordance with the reset window size. In step S1712, the control unit 1000 of the server device 901 adjusts the transmission interval by waiting during a time period after the screen data is generated in step S1704 and before the transmission interval set in step S1701 has passed.

In step S1712, it is assumed that the acknowledgement 1400 is received from the client device 902 during a time period after the screen data is generated in step S1704 and before the transmission interval has passed. In this case, every time the acknowledgement 1400 is received, the control unit 1000 of the server device 901 adds a value to N so as to update the unused size (the value N). The value added to N varies according to whether the received acknowledgement 1400 is the acknowledgement 1400 of the screen information 1300 transmitted before the resetting process or the acknowledgement 1400 of the screen information 1300 transmitted when the window size after the resetting process has a current value.

This is because, when the window size is changed as a result of the resetting process, the capacity of the buffer that is associated with the unused size (the value N) of 1 after the resetting process is different from the capacity before the resetting process. As described above, the window size is obtained by dividing the buffer size by the transmission data size (expression 2). Here, it is assumed that the transmission data size has a value obtained by estimating a maximum data size of the transmission data such as the screen information 1300 transmitted by the server device 901. In this case, the window size is used for a value indicating a number of pieces of transmission data that can be stored in the buffer. Assume, for example, that, when the window size is associated with the buffer size as described above, the window size before resetting is 3, and the window size after resetting is 6. In this case, the buffer size before resetting that is allocated to the value N of 1 corresponds to the window size after resetting that is allocated to the value N of 2. Therefore, when the acknowledgement 1400 of the screen information 1300 transmitted before resetting is received after resetting, an actual unused size of the window having the window size after resetting is not reflected in the value N, unless N is incremented by 2, not 1. In view of the foregoing, in step S1712, when the acknowledgement 1400 of the screen information 1300 transmitted when the value of the window size is a value before resetting is received, nAckPlus reflecting a change in the window size due to resetting is added to N so as to update the unused size (the value N). Calculation of nAckPlus is described later with reference to FIG. 18. In step S1712, when the control unit 1000 of the server device 901 receives the acknowledgement 1400 of the screen information 1300 transmitted when the value of the window size is a currently set value, the control unit 1000 of the server device 901 increments N by 1, and updates the unused size (the value N).

Whether the received acknowledgement 1400 is the acknowledgement 1400 of the screen information 1300 transmitted before resetting or the acknowledgement 1400 of the screen information 1300 transmitted when the value of the window size is a currently set value may be determined as described below. As an example, the screen number included in the received acknowledgement 1400 is divided by the prescribed number of times used in step S1709, and the obtained value is rounded down to an integer so as to obtain a value A. In addition, the screen number added to the screen information 1300 when the process of step S1706 was previously performed is divided by the prescribed number of times used in step S1709, and the obtained value is rounded down to an integer so as to obtain a value B. When the obtained values A and B are equal to each other, it may be determined that the received acknowledgement 1400 is the acknowledgement 1400 of the screen information 1300 transmitted when the value of the window size is a currently set value. When the obtained value A is less than the value B, it may be determined that the received acknowledgement 1400 is the acknowledgement 1400 of the screen information 1300 transmitted before resetting. A method for determining whether the received acknowledgement 1400 is the acknowledgement 1400 of the screen information 1300 transmitted before resetting or the acknowledgement 1400 of the screen information 1300 transmitted when the value of the window size is a currently set value is not limited to the above method. In another embodiment, another method may be employed. In step S1712, when the set transmission interval has passed after the screen data is generated in step S1704, the flow returns to step S1704.

The process performed by the control unit 1100 of the client device 902 is described next, with reference to the operation flow on the right-hand side of FIG. 17. An operation flow of the process performed by the client device 902 in FIG. 17 is performed by the control unit 1100 of the client device 902 reading and executing the program 1120 stored in the storage 1110. In one embodiment, in the client device 902, when an application constructing the remote desktop environment with the server device 901 is executed, and communication between the server device 901 and the client device 902 is established, the operation flow on the right-hand side of FIG. 17 is initiated.

In step C1701, the control unit 1100 of the client device 902 performs a setting process. As an example, when the client device 902 measures the network environment, the control unit 1100 of the client device 902 may perform the processes of steps C1501 to C1503 of FIG. 15 in the setting process. As another example, when the server device 901 measures the network environment, the control unit 1100 of the client device 902 may perform the processes of steps C1601 to C1603 of FIG. 16 in the setting process. The processes of steps C1702 to C1706 respectively correspond, for example, to the processes of steps C1504 to C1508 of FIG. 15 performed by the client device 902. As an example, the control unit 1100 of the client device 902 may perform processes similar to the corresponding processes of steps C1504 to C1508 in steps C1702 to C1706. By performing the processes of steps C1702 to C1706, upon receipt of the screen information 1300, the client device 902 stores the screen information 1300 in the buffer, and transmits the acknowledgement 1400 of the screen information 1300 to the server device 901. The client device 902 displays screen data of the screen information 1300 stored in the buffer on the display screen of the display device 905 in order of the screen number. The client device 902 also erases the screen information 1300 including the displayed screen data from the buffer.

A resetting process is described below in detail with reference to FIG. 18. FIG. 18 illustrates a resetting process performed by the control unit 1000 of the server device 901 in step S1710 of FIG. 17. An operation flow of the resetting process in FIG. 18 is performed by the control unit 1000 of the server device 901 reading and executing the program 1020 stored in the storage 1010. In one embodiment, when the process moves on to step S1710 of FIG. 17, the resetting process is initiated.

In step S1801, the control unit 1000 of the server device 901 stores a current unused size (the value N) in the variable $N_{old}$. The control unit 1000 of the server device 901 also stores the transmission data size used to calculate the value of the window size that has been set before the resetting process is initiated in nSendSize$_{old}$. As described above, the processes from the process of step S1705 of determination of Yes to the process of S1709 are repeated until nCount reaches a value exceeding a prescribed number. In every repetition, in step S1708, the data size of the transmitted screen information 1300 is stored in a corresponding nSize[nCount]. In step S1801, the control unit 1000 of the server device 901 obtains the value nSize [nCount] having a maximum data size among stored nSize [nCount] values (where nCount is 0 to a prescribed number). The control unit 1000 of the server device 901 stores the obtained value $nSize[nCount]$ having the maximum data size as a new transmission data size in $nSendSize_{new}$.

In another embodiment, in step S1801, an average data size of nSize [nCount] (where nCount is 0 to a prescribed number) may be used for the value stored as the new transmission data size in $nSendSize_{new}$. The average data size of nSize[nCount] (where nCount is 0 to a prescribed number) may be calculated using the following expression, for example.

$$nSendSize_{new} = \left( \frac{\sum_{i=0}^{nCount} nSize[i]}{nCount} \right)$$

In step S1802, the control unit 1000 of the server device 901 calculates a new window size according to the above expression 2 by using the obtained new transmission data size $nSendSize_{new}$, and resets the value of the window size. The value set in step S1701 is used for the value of the buffer size. In step S1803, the control unit 1000 of the server device 901 calculates what value of the window size newly set in step S1802 $N_{old}$, which is the unused size of the window before initiation of the resetting process, corresponds to. This calculation is performed using an expression of step S1803, for example. Note that a value obtained according to the expression of step S1803 is rounded up to an integer. The control unit 1000 of the server device 901 resets N, which is a variable storing the value of the unused size of the window, to the value obtained according to the expression of step S1803. The reset value N is used, for example, in steps S1705, S1707, and S1712 described above.

In step S1804, the control unit 1000 of the server device 901 calculates nAckPlus. nAckPlus represents a ratio of N reset in step S1803 to $N_{old}$, which is the unused size of the window before initiation of the resetting process. Here, nAckPlus is a value that is added to N when the acknowledgement 1400 of the screen information 1300 transmitted before resetting is received in step S1712, as described above. In step S1805, the control unit 1000 of the server device 901 resets the transmission interval by dividing, for example, the round trip time obtained in step S1701 by the window size newly calculated in step S1802 according to the above expression 3. In step S1805, the transmission interval may be calculated by dividing, for example, $nSendSize_{new}$ obtained in step S1801 by the available band obtained in step S1701 according to the above expression 3. In step S1806, the control unit 1000 of the server device 901 resets the values nCount and nSize[] to 0, this operation flow is finished, and the flow moves on to step S1712 of FIG. 17.

According to the operation flows of FIGS. 17 and 18 described above, the server device 901 performs the resetting process every time nCount reaches a value exceeding a prescribed number. In the resetting process, the window size and the transmission interval are reset on the basis of, for example, the data size of the screen information 1300 transmitted in the repetition of the value nCount from 0 to the prescribed number. The value N representing a current unused size is reset in accordance with the reset value of the window size. Further, when the acknowledgement 1400 of the screen information 1300 transmitted when the value of the window size is a value before resetting is received, nAckPlus for updating the reset value N is calculated. In the operation flows of FIGS. 17 and 18, the window size is dynamically reset in accordance with the data size of the actually transmitted screen information 1300, and this allows an appropriate transmission interval to be dynamically reset in accordance with a change in the data size of the screen information 1300. The obtained transmission interval is set so as to have a length that suppresses, for example, a drop frame and makes transmission intervals substantially uniform. This allows the server device 901 to transmit the screen information 1300 to the client device 902 every time the set transmission interval has passed. As a result, the display screen of the client device 902 can be updated at substantially uniform updating intervals, and usability is improved.

In the processes of steps S1701 to S1703 and S1708 to S1710 in the operation flow of FIG. 17 described above, the control unit 1000 of the server device 901 functions, for example, as the setting unit 1014. In the process of step S1704, the control unit 1000 of the server device 901 functions, for example, as the screen data obtaining unit 1015. In the process of step S1705, the control unit 1000 of the server device 901 functions, for example, as the transmission availability determining unit 1016. In the processes of steps S1706 and S1707, the control unit 1000 of the server device 901 functions, for example, as the screen information transmitting unit 1017. In the processes of steps S1711 and S1712, the control unit 1000 of the server device 901 functions, for example, as the adjusting unit 1018. The transmission availability determining unit 1016 and the screen information transmitting unit 1017 function as the transmitting unit 1019 in the processes of steps S1705 to S1707. Further, in the processes of steps S1801 to S1806 in the operation flow of FIG. 18, the control unit 1000 of the server device 901 functions, for example, as the setting unit 1014.

In the process of step C1701, the control unit 1100 of the client device 902 functions, for example, as the setting unit 1114. In the process of step C1702, the control unit 1100 of the client device 902 functions, for example, as the screen information receiving unit 1115. In the process of step C1703, the control unit 1100 of the client device 902 functions, for example, as the acknowledgement transmitting unit 1116. In the processes of steps C1704 to C1706, the control unit 1100 of the client device 902 functions, for example, as the screen updating unit 1117.

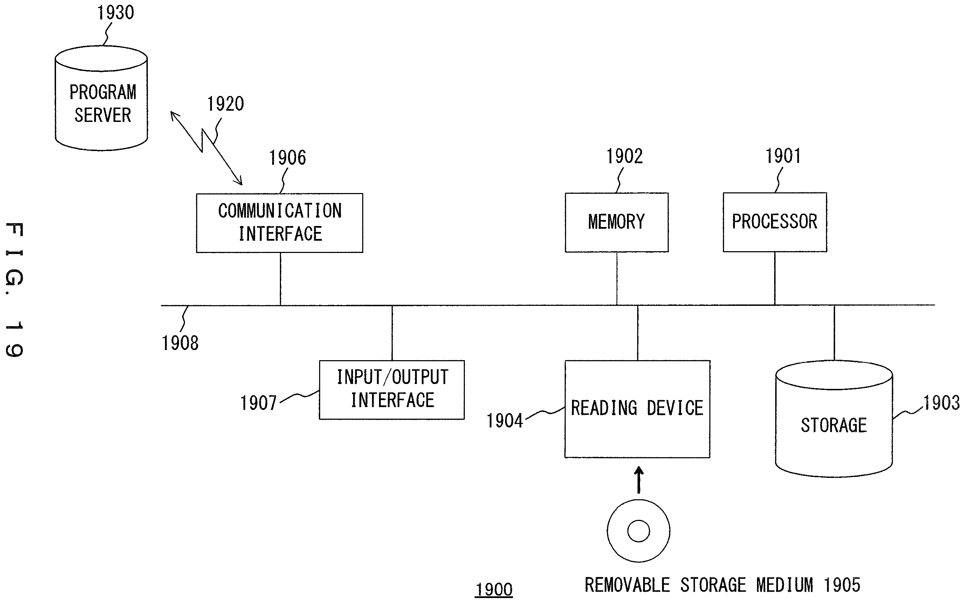

FIG. 19 illustrates a hardware configuration of an information processing device 1900, such as a computer, that implements the server device 901 according to the embodiments. The hardware configuration illustrated in FIG. 19 that implements the server device 901 includes, for example, a processor 1901, a memory 1902, a storage 1903, a reading device 1904, a communication interface 1906, and an input/output interface 1907. The processor 1901, the memory 1902, the storage 1903, the reading device 1904, the communication interface 1906, and the input/output interface 1907 are connected to each other via a bus 1908, for example.

The processor 1901 provides all or part of functions of the above respective function units by executing the program 1020 including a program describing the procedure of, for example, the operation flows above by using the memory 1902. As an example, the control unit 1000 of the server device 901 is, for example, the processor 1901, and the storage 1010 includes, for example, the memory 1902, the storage 1903, and a removable storage medium 1905. In the storage 1903 of the server device 901, the program 1020 is stored for example. The processor 1901 of the server device 901 functions, for example, as the connection establishing unit 1011, the user operation receiving unit 1012, the screen updating unit 1013, and the setting unit 1014 by reading and executing, for example, the program 1020 stored in the storage 1903. The processor 1901 of the server device 901 also functions as the screen data obtaining unit 1015, the transmission availability determining unit 1016, and the screen information transmitting unit 1017 by reading and executing, for example, the program 1020 stored in the storage 1903. The processor 1901 of the server device 901 further functions as the adjusting unit 1018 and the transmitting unit 1019 by reading and executing, for example, the program 1020 stored in the storage 1903.

The memory 1902 is, for example, a semiconductor memory, and is configured to include a RAM area and a ROM area. The storage 1903 is, for example, a hard disk, a semiconductor memory such as a flash memory, or an external storage.

The reading device 1904 accesses the removable storage medium 1905 in accordance with instructions of the processor 1901. The removable storage medium 1905 is implemented, for example, by a semiconductor device (for example, a USB memory), a medium that information is input to or output from by a magnetic action (for example, a magnetic disk), a medium that information is input to or output from by an optical action (for example, a CD-ROM or a DVD), or the like. The communication interface 1906 transceives data via a network 1920 in accordance with instructions of the processor 1901. The network 1920 may be, for example, the network 903 described above. The input/output interface 1907 corresponds for example to an interface between an input device and the output device. The input device is, for example, a device such as a keyboard or a mouse that receives instructions from a user, for example. The output device is, for example, a display device such as a display, or a sound device such as a speaker.

Respective programs according to the embodiments are provided to the server device 901, for example, in the following forms:

    (1) Installed in advance onto the storage 1903;
    (2) Provided by the removable storage medium 1905; and
    (3) Provided from a program server 1930.

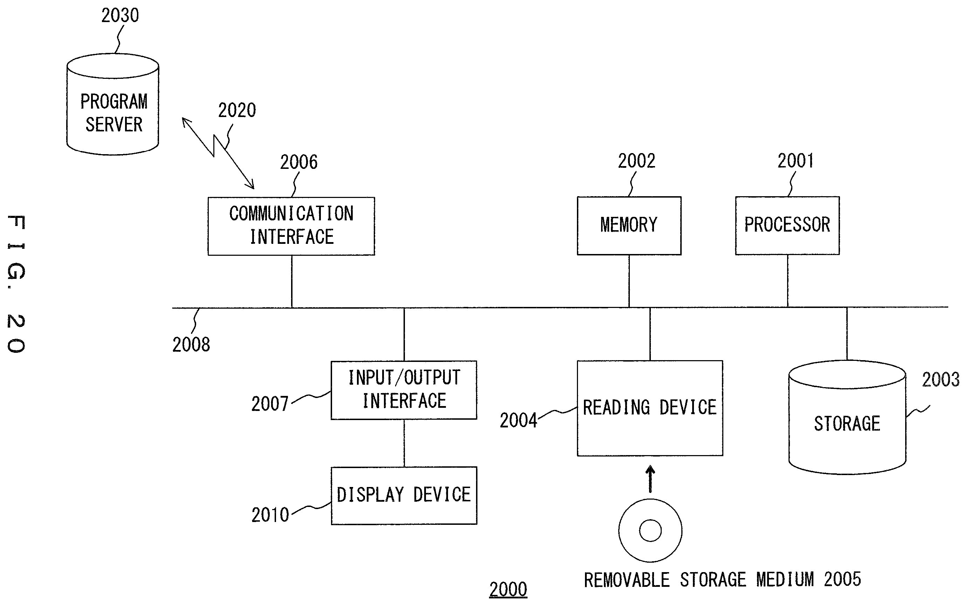

FIG. 20 illustrates a hardware configuration of an information processing device 2000, such as a computer, that implements the client device 902 according to the embodiments. The hardware configuration illustrated in FIG. 20 that implements the client device 902 includes, for example, a processor 2001, a memory 2002, a storage 2003, a reading device 2004, a communication interface 2006, an input/output interface 2007, and a display device 2010. The processor 2001, the memory 2002, the storage 2003, the reading device 2004, the communication interface 2006, and the input/output interface 2007 are connected to each other, for example, via a bus 2008.

The processor 2001 provides all or part of functions of the above respective function units by executing the program 1120 including a program describing the procedure of, for example, the above operation flows by using the memory 2002. As an example, the control unit 1100 of the client device 902 is, for example, the processor 2001, and the storage 1110 includes, for example, the memory 2002, the storage 2003, and a removable storage medium 2005. In the storage 2003 of the client device 902, the program 1120 is stored for example. The processor 2001 of the client device 902 functions as the connection establishing unit 1111, the user operation obtaining unit 1112, the user operation transmitting unit 1113, and the setting unit 1114 by reading and executing, for example, the program 1120 stored in the storage 2003. The processor 2001 of the client device 902 also functions as the screen information receiving unit 1115, the acknowledgement transmitting unit 1116, and the screen updating unit 1117 by reading and executing, for example, the program 1120 stored in the storage 2003.

The memory 2002 is, for example, a semiconductor memory, and is configured to include a RAM area and a ROM area. The storage 2003 is, for example, a hard disk, a semiconductor memory such as a flash memory, or an external storage.

The reading device 2004 accesses the removable storage medium 2005 in accordance with instructions of the processor 2001. The removable storage medium 2005 is implemented, for example, by a semiconductor device (for example, a USB memory), a medium that information is input to or output from by a magnetic action (for example, a magnetic disk), a medium that information is input to or output from by an optical action (for example, a CD-ROM or a DVD), or the like. The communication interface 2006 transceives data via a network 2020 in accordance with instructions of the processor 2001. The network 2020 may be, for example the network 903 described above. The input/output interface 2007 corresponds for example to an interface between an input device and an output device. In FIG. 20, for example, the display device 2010 such as a display is connected to the input/output interface 2007. Another output device such as a speaker may also be connected to the input/output interface 2007. An input device such as a keyboard or a mouse may be connected to the input/output interface 2007.

Respective programs according to the embodiments are provided to the client device 902, for example, in the following forms:

(1) Installed in advance onto the storage 2003;
(2) Provided by the removable storage medium 2005; and
(3) Provided from a program server 2030.

Some embodiments have been described above. However, the embodiments are not limited to the embodiments above, and are to be construed as including various variations and alternations of the embodiments above. As an example, it can be understood that various embodiments can be embodied by deforming components without departing from the sprit or scope of the embodiments. It can also be understood that various embodiments can be implemented by appropriately combining a plurality of components disclosed in the embodiments above. Further, those skilled in the art could understand that various embodiments can be implemented by deleting or substituting some components of all of the components disclosed in the embodiment, or adding some components to the components disclosed in the embodiment.

Explanation of Letters or Numerals

| | |
|---|---|
| 900 | System |
| 901 | Server device |
| 902 | Client device |
| 903 | Network |
| 905 | Display device |
| 1011 | Connection establishing unit |
| 1012 | User operation receiving unit |
| 1013 | Screen updating unit |
| 1014 | Setting unit |
| 1015 | Screen data obtaining unit |
| 1016 | Transmission availability determining unit |
| 1017 | Screen information transmitting unit |
| 1018 | Adjusting unit |
| 1019 | Transmitting unit |
| 1111 | Connection establishing unit |
| 1112 | User operation obtaining unit |
| 1113 | User operation transmitting unit |
| 1114 | Setting unit |
| 1115 | Screen information receiving unit |
| 1116 | Acknowledgement transmitting unit |
| 1117 | Screen updating unit |
| 1900 | Information processing device |
| 1901 | Processor |
| 1902 | Memory |
| 1903 | Storage |
| 1904 | Reading device |
| 1905 | Removable storage medium |

1906    Communication interface
1907    Input/output interface
1908    Bus
2000    Information processing device
2001    Processor
2002    Memory
2003    Storage
2004    Reading device
2005    Removable storage medium
2006    Communication interface
2007    Input/output interface
2008    Bus
2010    Display device

**Claims**

1.  A method performed by an information processing device, the method comprising:

    calculating a buffer size of a buffer included in a client device by multiplying a band available in communication with the client device by a round trip time of the communication;
    calculating an integer value by turning a real number into an integer, and setting the integer value as an unused size, the real number being obtained by dividing the buffer size by a transmission data size set for the client device;
    setting a value obtained by dividing the round trip time by the integer value or a value obtained by dividing the transmission data size by the band as a transmission interval;
    every time the transmission interval has passed, determining whether the unused size is greater than a first value, generating image data of a screen of a remote desktop and transmitting the image data to the client device when the unused size is greater than the first value, and subtracting a second value from the unused size; and
    every time a response to the image data transmitted by the subtracting is received from the client device, adding the second value to the unused size.

2.  The method according to claim 1, further comprising:

    performing resetting including

        when the subtracting transmits a prescribed number of pieces of image data to the client device, resetting the transmission data size to a maximum transmission data size of the transmission data sizes of the prescribed number of pieces of image data;
        resetting the integer value to a value obtained by turning a second real number into a second integer, the second real number being obtained by dividing the buffer size by the reset transmission data size; and
        resetting the transmission interval to a value obtained by dividing the round trip time by the reset integer value, or a value obtained by dividing the reset transmission data size by the band.

3.  The method according to claim 1, further comprising:

    performing resetting including

        when the subtracting transmits a prescribed number of pieces of image data to the client device, resetting the transmission data size to an average transmission data size of transmission data sizes of the prescribed number of pieces of image data;
        resetting the integer value to a value obtained by turning a second real number into a second integer, the second real number being obtained by dividing the buffer size by the reset transmission data size; and
        resetting the transmission interval to a value obtained by dividing the round trip time by the reset integer value, or a value obtained by dividing the reset transmission data size by the band.

4.  The method according to claim 2 or 3, wherein
    when the subtracting transmits the prescribed number of pieces of image data to the client device, the resetting further includes resetting the unused size to a value obtained by turning a third real number into a third integer, the third real number being obtained by dividing a value obtained by multiplying the transmission data size by the unused size by the reset transmission size, and calculating a correction added value by dividing the reset unused size by the unused size before the resetting, and

when the resetting is performed, every time the adding receives the response to the image data transmitted by the subtracting from the client device, the adding determines whether the response is the image data transmitted to the client device before the resetting is performed, or the image data transmitted to the client device after the resetting is performed, and the adding adds the correction added value to the reset unused size when the response is the image data transmitted to the client device before the resetting is performed, and adds the second value to the reset unused size when the response is the image data transmitted to the client device after the resetting is performed.

5. A program for causing an information processing device to execute a process comprising:

calculating a buffer size of a buffer included in a client device by multiplying a band available in communication with the client device by a round trip time of the communication;
calculating an integer value by turning a real number into an integer, and setting the integer value as an unused size, the real number being obtained by dividing the buffer size by a transmission data size set for the client device;
setting a value obtained by dividing the round trip time by the integer value or a value obtained by dividing the transmission data size by the band as a transmission interval;
every time the transmission interval has passed, determining whether the unused size is greater than a first value, generating image data of a screen of a remote desktop and transmitting the image data to the client device when the unused size is greater than the first value, and subtracting a second value from the unused size; and
every time a response to the transmitted image data is received from the client device, adding the second value to the unused size.

6. An information processing device comprising:

a setting unit that calculates a buffer size of a buffer included in a client device by multiplying a band available in communication with the client device by a round trip time of the communication, calculates an integer value by turning a real number into an integer and sets the integer value as an unused size, the real number being obtained by dividing the buffer size by a transmission data size set for the client device, and sets a value obtained by dividing the round trip time by the integer value or a value obtained by dividing the transmission data size by the band as a transmission interval;
a transmitting unit that, every time the transmission interval has passed, determines whether the unused size is greater than a first value, generates image data of a screen of a remote desktop and transmits the image data to the client device when the unused size is greater than the first value, and subtracts a second value from the unused size; and
an adjusting unit that, every time a response to the image data transmitted by the transmitting unit is received from the client device, adds the second value to the unused size.

CLIENT DEVICE                    SERVER DEVICE

                                              (1)
                                ┌─────────────────────┐
                                │  CAPTURE SCREEN 1    │
                                └─────────────────────┘
                                              (2)
                                ┌─────────────────────┐
                                │   SCREEN 1 DATA      │
                                └─────────────────────┘
    (3)
┌─────────────────────┐
│   SCREEN 1 DATA      │
└─────────────────────┘
    (4)
┌─────────────────────┐                       (5)
│  DISPLAY SCREEN 1    │         ┌─────────────────────┐
└─────────────────────┘         │  CAPTURE SCREEN 2    │
                                └─────────────────────┘
              ACKNOWLEDGEMENT                  (6)
               OF SCREEN 1      ┌─────────────────────┐
UPDATING                        │   SCREEN 2 DATA      │
INTERVAL                        └─────────────────────┘
    (7)
┌─────────────────────┐
│   SCREEN 2 DATA      │
└─────────────────────┘
┌─────────────────────┐
│  DISPLAY SCREEN 2    │
└─────────────────────┘
    (8)
                                ACKNOWLEDGEMENT
                                 OF SCREEN 2

F I G.  1

CLIENT DEVICE                                    SERVER DEVICE

                    ACKNOWLEDGEMENT                                (1)
                    OF SCREEN 1              CAPTURE SCREEN 1

                                                                  (2)
                                             SCREEN 1 DATA

(5)                                                               (3)
        SCREEN 1 DATA                        CAPTURE SCREEN 2

(6)                                                               (4)
        DISPLAY SCREEN 1                     SCREEN 2 DATA

UPDATING        (7)
INTERVAL    SCREEN 2 DATA                     CAPTURE SCREEN 3

        DISPLAY SCREEN 2                      SCREEN 3 DATA
            (8)

        SCREEN 3 DATA                         CAPTURE SCREEN 4

        DISPLAY SCREEN 3                      SCREEN 4 DATA

                            ACKNOWLEDGEMENT
                            OF SCREEN 2

                    ACKNOWLEDGEMENT
                    OF SCREEN 3

F I G. 2

CLIENT DEVICE                                    CLIENT DEVICE

ACKNOWLEDGEMENT OF SCREEN 1
                                                                    (1)
ACKNOWLEDGEMENT OF              WINDOW SIZE = 3                      (1)
SCREEN 2
                                   SCREEN 1                          (2)
ACKNOWLEDGEMENT
OF SCREEN 3                        SCREEN 2
                                                                    (3)
                                   SCREEN 3                          (3)
                                                                    (4)
                                                    ✕               (5)
                                                                    (6)
                                                                    (7)
                                                                    (8)

SCREEN 4

SCREEN 5

F I G.  3

23

F I G. 4

F I G. 5

F I G. 6

CLIENT DEVICE      SERVER DEVICE

WINDOW SIZE = 2

ACKNOWLEDGEMENT OF SCREEN 1

ACKNOWLEDGEMENT OF SCREEN 2

SCREEN 1

SCREEN 2

UPDATING INTERVAL

NON-UNIFORM

ACKNOWLEDGEMENT OF SCREEN 3

SCREEN 3

SCREEN 4

ACKNOWLEDGEMENT OF SCREEN 4

SCREEN 5

SCREEN 6

ACKNOWLEDGEMENT OF SCREEN 5

ACKNOWLEDGEMENT OF SCREEN 6

( a )

CLIENT DEVICE      SERVER DEVICE

WINDOW SIZE = 2

UPDATING INTERVAL

SCREEN 1

ACKNOWLEDGEMENT OF SCREEN 1

SCREEN 2

ACKNOWLEDGEMENT OF SCREEN 2

SCREEN 3

ACKNOWLEDGEMENT OF SCREEN 3

UNIFORM

SCREEN 4

ACKNOWLEDGEMENT OF SCREEN 4

SCREEN 5

ACKNOWLEDGEMENT OF SCREEN 5

SCREEN 6

( b )

EP 3 026 566 A1

F I G. 7

**CLIENT DEVICE**        **SERVER DEVICE**      **CLIENT DEVICE**        **SERVER DEVICE**

WINDOW SIZE = 2

ACKNOWLEDGEMENT OF SCREEN 1

SCREEN 1

ACKNOWLEDGEMENT OF SCREEN 2

SCREEN 2

USER OPERATION

ACKNOWLEDGEMENT OF SCREEN 3

SCREEN 3

RESPONSIVENESS

SCREEN 4

ACKNOWLEDGEMENT OF SCREEN 4

SCREEN 5

SCREEN 6

ACKNOWLEDGEMENT OF SCREEN 6

ACKNOWLEDGEMENT OF SCREEN 5

( a )

WINDOW SIZE = 2

SCREEN 1

ACKNOWLEDGEMENT OF SCREEN 1

SCREEN 2

ACKNOWLEDGEMENT OF SCREEN 2

USER OPERATION

SCREEN 3

RESPONSIVENESS

SCREEN 4

ACKNOWLEDGEMENT OF SCREEN 3

SCREEN 5

ACKNOWLEDGEMENT OF SCREEN 4

SCREEN 6

ACKNOWLEDGEMENT OF SCREEN 5

( b )

F I G. 8

901 SERVER

903

900

902 CLIENT

DISPLAY DEVICE

905

F I G. 9

F I G.  1 0

FIG. 11

| HEADER INFORMATION | IDENTIFICATION INFORMATION | AVAILABLE BAND | ROUND TRIP TIME |

1200

F I G . 1 2

| HEADER INFORMATION | IDENTIFICATION INFORMATION | SCREEN NUMBER | DIVISION NUMBER | SCREEN DATA |
|---|---|---|---|---|

1300

F I G. 1 3

| HEADER INFORMATION | DENTIFICATION INFORMATION | SCREEN NUMBER |
|---|---|---|

1400

F I G. 1 4

FIG. 15

SERVER DEVICE

START

CONNECTION

CLIENT DEVICE

START

S1501
RECEIVE SETTING INFORMATION

S1502
CALCULATE BUFFER SIZE, WINDOW SIZE, AND TRANSMISSION INTERVAL

S1503
N = WINDOW SIZE

S1504
GENERATE SCREEN DATA

S1505
N > 0 ?
No          Yes

S1508
DROP FRAME

S1506
TRANSMIT SCREEN INFORMATION

S1507
N = N-1

S1509
ADJUST TRANSMISSION INTERVAL (N = N + 1 EVERY TIME ACKNOWLEDGEMENT IS RECEIVED)

C1501
MEASURE NETWORK ENVIRONMENT

C1502
SET BUFFER SIZE

C1503
TRANSMIT SETTING INFORMATION

C1504
RECEIVE SCREEN INFORMATION, AND STORE IT IN BUFFER

C1505
TRANSMIT ACKNOWLEDGEMENT

C1506
REARRANGE ORDER

C1507
HAS SCREEN TO BE DISPLAYED BEEN STORED IN BUFFER?
No          Yes

C1508
UPDATE SCREEN, AND ERASE SCREEN INFORMATION FROM BUFFER

EP 3 026 566 A1

35

EP 3 026 566 A1

F I G. 16

**SERVER DEVICE**

START ---- CONNECTION ----

MEASURE NETWORK ENVIRONMENT — S1601

TRANSMIT SETTING INFORMATION — S1602

CALCULATE BUFFER SIZE, WINDOW SIZE, AND TRANSMISSION INTERVAL — S1603

RECEIVE SYNCHRONIZING SIGNAL — S1604

N = WINDOW SIZE — S1605

GENERATE SCREEN DATA — S1606

N > 0 ? — S1607

No → DROP FRAME — S1610

Yes → TRANSMIT SCREEN INFORMATION — S1608

N = N-1 — S1609

ADJUST TRANSMISSION INTERVAL (N = N + 1 EVERY TIME ACKNOWLEDGEMENT IS RECEIVED) — S1611

**CLIENT DEVICE**

START

RECEIVE SETTING INFORMATION — C1601

SET BUFFER SIZE — C1602

TRANSMIT SYNCHRONIZING SIGNAL — C1603

RECEIVE SCREEN INFORMATION, AND STORE IT IN BUFFER — C1604

TRANSMIT ACKNOWLEDGEMENT — C1605

REARRANGE ORDER — C1606

HAS SCREEN INFORMATION TO BE DISPLAYED BEEN STORED IN BUFFER? — C1607

No

Yes → UPDATE SCREEN, AND ERASE SCREEN INFORMATION FROM BUFFER — C1608

F I G. 17

START

S1801

$$N_{old} = N$$
$$nSendSize_{old} = \text{TRANSMISSION DATA SIZE}$$
$$nSendSize_{new} = maximum(nSize[])$$

S1802

$$\text{WINDOW SIZE} = \left\lfloor \frac{\text{BUFFER SIZE}}{nSendSize_{new}} \right\rfloor$$

S1803

$$N = \left\lceil \frac{nSendSize_{old} \times N_{old}}{nSendSize_{new}} \right\rceil$$

S1804

$$nAckPlus = \frac{N}{N_{old}}$$

S1805

$$\text{TRANSMISSION INTERVAL} = \frac{\text{ROUND TRIP TIME}}{\text{WINDOW SIZE}}$$

S1806

$$nCount = 0$$
$$nSize[] = 0$$

END

F I G.  1 8

F I G .  1 9

FIG. 20

2030 PROGRAM SERVER

2020

2006 COMMUNICATION INTERFACE

2002 MEMORY

2001 PROCESSOR

2008

2007 INPUT/OUTPUT INTERFACE

2004 READING DEVICE

2003 STORAGE

2010 DISPLAY DEVICE

2000

REMOVABLE STORAGE MEDIUM 2005

## INTERNATIONAL SEARCH REPORT

| International application No. |
| --- |
| PCT/JP2013/069774 |

A. CLASSIFICATION OF SUBJECT MATTER
*G06F13/00(2006.01)i*

According to International Patent Classification (IPC) or to both national classification and IPC

B. FIELDS SEARCHED

Minimum documentation searched (classification system followed by classification symbols)
G06F13/00, H04L12/811, H04L12/841, H04N21/4143, H04N21/433

Documentation searched other than minimum documentation to the extent that such documents are included in the fields searched
Jitsuyo Shinan Koho        1922-1996    Jitsuyo Shinan Toroku Koho    1996-2013
Kokai Jitsuyo Shinan Koho   1971-2013    Toroku Jitsuyo Shinan Koho    1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2001-285860 A  (Matsushita Electric Industrial Co., Ltd.), 12 October 2001 (12.10.2001), paragraphs [0069], [0073], [0074], [0095], [0106], [0107]; fig. 1 & EP 1139667 A2            & US 2001/0038644 A1 | 1-6 |
| A | JP 2013-105367 A  (Hitachi, Ltd.), 30 May 2013 (30.05.2013), paragraphs [0020], [0047], [0091]; fig. 1, 9, 17 & US 2013/0124614 A1 | 1-6 |
| A | JP 2002-518951 A  (General Instrument Corp.), 25 June 2002 (25.06.2002), claim 1 & WO 1999/066734 A1     & CN 1315116 A | 1-6 |

|☒| Further documents are listed in the continuation of Box C. | | See patent family annex. |

* Special categories of cited documents:
"A"  document defining the general state of the art which is not considered   to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search 12 December, 2013 (12.12.13) | Date of mailing of the international search report 24 December, 2013 (24.12.13) |
| --- | --- |
| Name and mailing address of the ISA/ Japanese Patent Office | Authorized officer |
| Facsimile No. | Telephone No. |

Form PCT/ISA/210 (second sheet) (July 2009)

## INTERNATIONAL SEARCH REPORT

| International application No. |
| --- |
| PCT/JP2013/069774 |

C (Continuation).  DOCUMENTS CONSIDERED TO BE RELEVANT

| Category* | Citation of document, with indication, where appropriate, of the relevant passages | Relevant to claim No. |
| --- | --- | --- |
| A | JP 2007-143113 A  (Matsushita Electric Industrial Co., Ltd.), 07 June 2007 (07.06.2007), paragraphs [0029], [0083], [0090], [0095]; fig. 1, 8 & US 2007/0086403 A1 | 1-6 |
| A | JP 2006-262116 A  (NEC Viewtechnology, Ltd.), 28 September 2006 (28.09.2006), paragraphs [0024], [0068] & US 2006/0209340 A1 | 1-6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005260302 A

- JP 2009049529 A